# EUROPEAN PATENT APPLICATION

(11) **EP 4 422 323 A1**
(43) Date of publication of application: **28.08.2024**
(21) Application number: 22882787.9
(22) Date of filing: 17.10.2022
(51) Int. Cl.: H04W 72/12

(54) **SERVICE PRIORITY DETERMINATION METHOD AND RELATED APPARATUS**

(30) Priority: 21.10.2021 CN 202111229561
(71) Applicant: Huawei Technologies Co., Ltd., Shenzhen, Guangdong 518129 (CN)
(72) Inventor: HUANG, Guogang, Shenzhen, Guangdong 518129 (CN); GUO, Yuchen, Shenzhen, Guangdong 518129 (CN); LI, Yunbo, Shenzhen, Guangdong 518129 (CN)
(74) Representative: Isarpatent
(86) International application number: PCT/CN2022/125598
(87) International publication number: WO 2023/066181

(57) **Abstract**

Embodiments of this application disclose a service priority determining method and a related apparatus, which may be used in a wireless local area network system that supports next-generation IEEE 802.11ax Wi-Fi protocols, for example, 802.11 series protocols such as 802.11be or extremely high throughput EHT. A first station STA sends a first frame to a first access point AP, where the first frame includes expected priority information, and the expected priority information is a service priority that is of a first service and that the first STA expects to request. The first STA receives a second frame from the first AP, where the second frame includes first priority information, and the first priority information indicates a service priority determined by the first AP for the first service. This helps improve or ensure fairness of low-latency service transmission of STAs.

## Description

This application claims priority to Chinese Patent Application No. 202111229561.5, filed with the China National Intellectual Property Administration on October 21, 2021 and entitled "SERVICE PRIORITY DETERMINING METHOD AND RELATED APPARATUS", which is incorporated herein by reference in its entirety.

### TECHNICAL FIELD

This application relates to the field of wireless technologies, and in particular, to a service priority determining method and a related apparatus.

### BACKGROUND

A wireless local area network (wireless local area network, WLAN) has been developed for many generations, including 802.11a/b/g, 802.11n, 802.11ac, 802.11ax, and 802.11be that is being under discussion. The 802.11be standard is referred to as an extremely high throughput (extremely high throughput, EHT) standard or a Wi-Fi 7 standard. A low delay is an important feature of the 802.11be standard.

A station (station, STA) may report a low-latency service to an access point (access point, AP) according to a stream classification service (stream classification service, SCS) mechanism, to request to add the low-latency service. For example, the STA sends an SCS request frame to the AP, where traffic identifier (traffic identifier, TID) information and a user priority that are carried in the SCS request frame indicate a service priority of the low-latency service. However, STAs respectively map low-latency services to TIDs, resulting in poor fairness of low-latency service transmission. For example, for low-latency services having a same quality of service (quality of service, QoS) requirement, a STA 1 maps a low-latency service to a TID 1, and a STA 2 maps a low-latency service to a TID 2, to map the low-latency services to different access categories (access categories, ACs) or map the low-latency services to different links through TID-to-link mapping (TID-to-link Mapping) negotiation, resulting in poor fairness. Actually, for the STA 1 and the STA 2, the low-latency services have the same QoS requirement, and need to correspond to a same service priority. Therefore, in a solution, the STAs respectively determine the TIDs to which the low-latency services are mapped, resulting in poor fairness of low-latency service transmission.

Therefore, how to map low-latency services of STAs to corresponding TIDs to improve or ensure fairness of low-latency service transmission of the STAs becomes an urgent problem to be resolved.

### SUMMARY

Embodiments of this application provide a service priority determining method and a related apparatus, to improve or ensure fairness of low-latency service transmission of STAs.

A first aspect of this application provides a service priority determining method, where the method includes:
A first STA sends a first frame to a first AP, where the first frame includes expected priority information, and the expected priority information is a service priority that is of a first service and that the first STA expects to request. The first STA receives a second frame from the first AP, where the second frame includes first priority information, and the first priority information indicates a service priority determined by the first AP for the first service.

In the foregoing technical solution, the first AP determines, for the first STA, the service priority corresponding to the first service, that is, the first AP finally determines the service priority to which the first service is mapped, and the STA does not determine the service priority corresponding to the service of the STA. This helps improve or ensure fairness of low-latency service transmission of different STAs. For example, for low-latency services that have a same QoS requirement and that are respectively of a STA 1 and a STA 2, a first AP may map the low-latency service of the STA 1 and the low-latency service of the STA 2 to a same traffic identifier (traffic identifier, TID), to ensure fairness of low-latency service transmission of different STAs. For example, the first AP may map the low-latency service of the STA 1 and the low-latency service of the STA 2 to a same TID according to a same mapping rule, to ensure fairness of low-latency service transmission of different STAs.

A second aspect of this application provides a service priority determining method, where the method includes:
A first AP receives a first frame from a first STA, where the first frame includes expected priority information, and the expected priority information is a service priority that is of a first service and that the first STA expects to request. The first AP sends a second frame to the first STA, where the second frame includes first priority information, and the first priority information indicates a service priority determined by the first AP for the first service.

In the foregoing technical solution, the first AP determines, for the first STA, the service priority corresponding to the first service, that is, the first AP finally determines the service priority to which the first service is mapped, and the STA does not determine the service priority corresponding to the service of the STA. This helps improve or ensure fairness of low-latency service transmission of different STAs. For example, for low-latency services that have a same QoS requirement and that are respectively of a STA 1 and a STA 2, a first AP may map the low-latency service of the STA 1 and the low-latency service of the STA 2 to a same TID, to ensure fairness of low-latency service transmission of different STAs. For example, the first AP may map the low-latency service of the STA 1 and the low-latency service of the STA 2 to a same TID according to a same mapping rule, to ensure fairness of low-latency service transmission of STAs.

With reference to the first aspect or the second aspect, in a first implementation of this application, the expected priority information includes TID information that the first STA expects to request.

A representation manner of the service priority that is of the first service and that the first STA expects to request is shown in this implementation. That is, the TID indicates a service priority through TID information representation.

With reference to any one of the first aspect, the second aspect, and the first implementation of this application, in a second implementation of this application, the first priority information includes target TID information, and the target TID information is TID information determined by the first AP for the first service.

In this implementation, the first AP determines the target TID information for the first service, and delivers the target TID information to the first STA, so that the first AP finally determines a TID corresponding to the first service. Currently, in a WLAN communication protocol, sequence number (sequence number, SN) allocation, block acknowledgment (block ACK, BA) setup, and TID-to-link mapping negotiation are all based on a TID corresponding to a service. Therefore, the first AP determines a corresponding target TID for the first service of the first STA. This helps improve or ensure fairness of low-latency service transmission of different STAs.

With reference to any one of the first aspect, the second aspect, the first implementation of this application, and the second implementation of this application, in a third implementation of this application, the target TID information further indicates access category (access category, AC) information corresponding to the first service, and there is a mapping relationship between the target TID information and the AC information.

In this implementation, the target TID information further indicates the AC information corresponding to the first service. The AC information corresponding to the service indicates a priority of channel contention of the service to some extent. Therefore, the first AP determines the corresponding target TID for the first service of the first STA, so that the first STA determines proper AC information for the first service based on the target TID. This helps further ensure fairness of channel contention of different STAs.

With reference to any one of the first aspect, the second aspect, and the first implementation to the third implementation of this application, in a fourth implementation of this application, the first priority information further includes AC information determined by the first AP for the first service.

In this implementation, the first AP may determine the AC information corresponding to the first service. A priority of data of the service during a channel access is directly determined based on the AC information corresponding to the service. In this application, the first AP determines the corresponding AC information for the first service. This helps further ensure fairness of low-latency service transmission of different STAs.

With reference to any one of the first aspect, the second aspect, and the first implementation to the fourth implementation of this application, in a fifth implementation of this application, the second frame is an SCS response frame, and the AC information is carried in a reserved bit of an intra-access category priority element of the SCS response frame, or the AC information is carried in a request type field of the SCS response frame.

In this implementation, a specific location at which the AC information may be carried in the SCS response frame is shown, and specifically, the AC information may be carried in the reserved bit of the intra-access category priority element or the request type field. The request type field is a reserved field. The first AP carries the AC information in the reserved bit of the intra-access class priority element or the request type field. This helps improve bit utilization, and a new field does not need to be redefined.

With reference to any one of the first aspect, the second aspect, and the first implementation to the fifth implementation of this application, in a sixth implementation of this application, the second frame is the SCS response frame, and the target TID information is carried in the reserved bit of the intra-access category priority element of the SCS response frame, the target TID information is carried in a user priority field of the intra-access category priority element of the SCS response frame, or the target TID information is carried in the request type field of the SCS response frame.

In this implementation, a specific location at which the target TID information may be carried in the SCS response frame is shown. This helps improve bit utilization, and a new field does not need to be redefined.

With reference to any one of the first aspect, the second aspect, and the first implementation to the sixth implementation of this application, in a seventh implementation of this application, the second frame further includes first broadcast target wake time (target wakeup time, TWT) identifier information, and the first broadcast TWT identifier information indicates first broadcast restricted target wake time (Broadcast Restricted TWT, rTWT) that the first STA may join. In other words, the first broadcast target wake time identifier information includes an identifier of the first broadcast rTWT.

In this implementation, the first AP directly indicates, based on the second frame, the first broadcast rTWT that the first STA may join, and the first STA does not need to exchange a TWT setup (TWT Setup) frame with the first AP to negotiate to join broadcast rTWT and negotiate TID information corresponding to a service that the first STA expects to transmit in the broadcast rTWT. This greatly reduces signaling interaction, and improves efficiency of joining the rTWT by the STA.

With reference to the seventh implementation, in an eighth implementation of this application, the second frame further includes first indication information, and the first indication information indicates that the second frame includes the first broadcast TWT identifier information.

In this implementation, the second frame may further carry the first indication information, to indicate that the second frame includes the first broadcast TWT identifier information. Therefore, the solution is applicable to a scenario in which a system includes a compatible STA and the STA does not support TWT.

With reference to the eighth implementation, in a ninth implementation of this application, the second frame is the SCS response frame, and the first indication information and the first broadcast TWT identifier information are carried in the request type field of the SCS response frame.

In this implementation, the request type field of the SCS response frame is a reserved field, and the first AP may carry the first indication information and the first broadcast TWT identifier information in the request type field of the SCS response frame. This helps improve bit utilization, and a new field does not need to be redefined.

With reference to the seventh implementation, in a tenth implementation of this application, the second frame is the SCS response frame, the SCS response frame includes a TWT element, and the first broadcast TWT identifier information is carried in the TWT element of the SCS response frame.

In this implementation, the SCS response frame may include the TWT element, and the first AP may carry the first broadcast TWT identifier information in the TWT element, to indicate the first broadcast rTWT. Therefore, the first broadcast rTWT is indicated in a process in which the first STA requests the low-latency service from the first AP. This reduces signaling overheads.

With reference to the tenth implementation, in an eleventh implementation of this application, a value of a negotiation type subfield of the TWT element of the SCS response frame is set to 3.

With reference to the seventh implementation and the tenth implementation, in a twelfth implementation of this application, the first frame is an SCS request frame, the SCS request frame includes a TWT element, the TWT element of the SCS request frame includes second broadcast TWT identifier information, and the second broadcast TWT identifier information indicates second broadcast rTWT that the first STA requests to join.

In this implementation, the SCS request frame may include the TWT element. The first STA may carry the second broadcast TWT identifier information in the TWT element, to request to join the second broadcast rTWT. Therefore, the first STA requests to join the second broadcast rTWT in a process of requesting the low-latency service from the first AP. This reduces signaling overheads.

With reference to any one of the seventh implementation to the twelfth implementation of this application, in a thirteenth implementation of this application, the method further includes:
The first STA actively initiates a channel access in a period other than the first broadcast rTWT.

In this implementation, in the period other than the first broadcast rTWT, the first STA does not need to be prohibited from actively initiating transmission. This helps reduce a delay of the low-latency service.

With reference to any one of the first aspect, the second aspect, and the first implementation to the thirteenth implementation of this application, in a fourteenth implementation of this application, the first frame is the SCS request frame, and the second frame is the SCS response frame. In this implementation, possible forms of the first frame and the second frame are shown to facilitate implementation of the solution.

A third aspect of this application provides a service priority determining method, including:
A first STA receives first information from a first AP, where the first information indicates a mapping rule of a service priority; and the first STA determines a service priority of a first service according to the mapping rule.

In the foregoing technical solution, the first STA determines the service priority of the first service according to the mapping rule sent by the first AP. It can be learned that, different STAs may respectively map services to corresponding service priorities according to the mapping rule broadcast by the first AP, to implement standardization of the mapping rule of the service priority. This improves or ensures fairness of low-latency service transmission of the different STAs.

With reference to the third aspect, in a first implementation of this application, the mapping rule includes a rule of mapping between a service and a TID and between the service and an AC.

That the first STA determines a service priority of a first service according to the mapping rule includes:
The first STA determines, according to the mapping rule, a TID corresponding to the first service and an AC corresponding to the first service.

In this implementation, the service priority of the first service may be represented by the TID and the AC that correspond to the first service. Therefore, the first AP may broadcast the rule of mapping between the service and the TID and between the service and the AC, so that the different STAs determine, according to a same mapping rule, TIDs and ACs to which the services are mapped. This improves or ensures fairness of low-latency service transmission of the different STAs.

With reference to any one of the third aspect, the first implementation of this application, and the second implementation of this application, in a third implementation of this application, the mapping rule includes a rule of mapping between a delay bound (Delay Bound) of a service and a TID and an AC of the service.

That the first STA determines a service priority of a first service according to the mapping rule includes:
The first STA determines, based on a delay bound of the first service and the mapping rule, a TID corresponding to the first service and an AC corresponding to the first service.

In this implementation, the first AP may broadcast the rule of mapping between the delay bound of the service and the TID and the AC of the service, so that the first STA can determine, based on the delay bound of the first service, the TID and the AC that correspond to the first service.

With reference to any one of the third aspect, the first implementation of this application, and the second implementation of this application, in a third implementation of this application, the first information is carried in a beacon frame or a probe response frame. In this implementation, the first AP may broadcast the mapping rule by using a broadcast frame such as the beacon frame or the probe response frame. Therefore, the different STAs determine, according to a same mapping rule, TIDs and ACs to which the services are mapped. This improves or ensures fairness of low-latency service transmission of the different STAs.

A fourth aspect of this application provides a service priority determining method, including:
A first AP determines a mapping rule of a service priority, and the first AP sends first information to a first STA, where the first information indicates the mapping rule of the service priority.

In the foregoing technical solution, the first AP sends the first information to the first STA, where the first information indicates the mapping rule of the service priority. The first STA determines a service priority of a first service according to the mapping rule. It can be learned that, different STAs may respectively map services to corresponding service priorities according to the mapping rule broadcast by the first AP, to implement standardization of the mapping rule of the service priority. This improves or ensures fairness of low-latency service transmission of the different STAs.

With reference to the fourth aspect, in a first implementation of this application, the mapping rule includes a rule of mapping between a service and a TID and between the service and an AC.

In this implementation, the service priority of the first service may be represented by the TID and the AC that correspond to the first service. Therefore, the first AP may broadcast the rule of mapping between the service and the TID and between the service and the AC, so that different STAs determine, according to a same mapping rule, TIDs and ACs to which the services are mapped. This improves or ensures fairness of low-latency service transmission of the different STAs.

With reference to the fourth aspect and the first implementation of this application, in a second implementation of this application, the mapping rule includes a rule of mapping between a delay bound of a service and a TID and an AC of the service.

In this implementation, the first AP may broadcast the rule of mapping between the delay bound of the service and the TID and the AC of the service, so that the first STA can determine, based on the delay bound of the first service, the TID and the AC that correspond to the first service.

With reference to any one of the fourth aspect, the first implementation of this application, and the second implementation of this application, in a third implementation of this application, the first information is carried in a beacon frame or a probe response frame. In this implementation, the first AP may broadcast the mapping rule by using a broadcast frame such as the beacon frame or the probe response frame. Therefore, the different STAs determine, according to a same mapping rule, TIDs and ACs to which the services are mapped. This improves or ensures fairness of low-latency service transmission of the different STAs.

A fifth aspect of this application provides a radio frame receiving method, including:
A first STA receives a third frame from a first AP, where the third frame includes first broadcast TWT identifier information, and the first broadcast TWT identifier information indicates first broadcast rTWT that the first STA may join; or the third frame includes a TWT element, the TWT element includes second information, and the second information indicates that service data corresponding to a first TID may be transmitted in the first broadcast rTWT. The first STA joins the first broadcast rTWT based on the third frame.

In the foregoing technical solution, the first AP may directly indicate, based on the third frame, the first broadcast rTWT that the first STA may join, or indicate, based on the third frame, a TID corresponding to the service data that may be transmitted in the first broadcast rTWT. The first STA determines, based on the third frame, that the first STA may join the first broadcast rTWT. The first STA no longer needs to exchange a TWT setup frame with the first AP to negotiate to join broadcast rTWT and negotiate TID information corresponding to a service that the first STA expects to transmit in the broadcast rTWT. This greatly reduces signaling interaction, and improves efficiency of joining the rTWT by the STA. That is, according to the technical solutions of this application, a process in which each STA negotiates with an AP to join corresponding broadcast rTWT is avoided. This reduces signaling interaction, and improves efficiency of joining the broadcast rTWT by the STA.

With reference to the fifth aspect, in a first implementation of this application, the method further includes:
The first STA actively initiates a channel access in a period other than the first broadcast rTWT.

In this implementation, in the period other than the first broadcast rTWT, the first STA does not need to be prohibited from actively initiating transmission. This helps reduce a delay of a low-latency service.

With reference to the fifth aspect and the first implementation of this application, in a second implementation of this application, the third frame further includes second indication information, and the second indication information indicates that the third frame includes the first broadcast TWT identifier information.

In this implementation, the third frame further includes the second indication information, to indicate that the third frame includes the first broadcast TWT identifier information. Therefore, the solution is applicable to a scenario in which a system includes a compatible STA and the STA does not support TWT.

With reference to any one of the fifth aspect, the first implementation of this application, and the second implementation of this application, in a third implementation of this application, the third frame is an SCS response frame, the SCS response frame includes a request type field, and the second indication information and the first broadcast TWT identifier information are carried in the request type field.

In this implementation, the request type field of the SCS response frame is a reserved field, and the first AP may carry the second indication information and the broadcast TWT identifier information in the request type field of the SCS response frame. This helps improve bit utilization, and a new field does not need to be redefined.

With reference to any one of the fifth aspect and the first implementation to the third implementation of this application, in a fourth implementation of this application, the third frame is the SCS response frame, the SCS request frame includes the TWT element, and the first broadcast TWT identifier information is carried in the TWT element.

In this implementation, the SCS response frame may include the TWT element, and the TWT element may carry the first broadcast TWT identifier information, to indicate, to the first STA, the first broadcast rTWT that the first STA may join.

With reference to any one of the fifth aspect and the first implementation to the fourth implementation of this application, in a fifth implementation of this application, a value of a negotiation type subfield of the TWT element of the SCS response frame is set to 3.

With reference to any one of the fifth aspect and the first implementation to the fifth implementation of this application, in a sixth implementation of this application, the method further includes:
The first STA sends an SCS request frame to the first AP, where the SCS request frame includes a TWT element, the TWT element of the SCS request frame includes second broadcast TWT identifier information, and the second broadcast TWT identifier information indicates second broadcast rTWT that the first STA joins.

In this implementation, the first STA sends the SCS request frame to the first AP. The SCS request frame may include the TWT element. The first STA may carry the second broadcast TWT identifier information in the TWT element, to request to join the second broadcast rTWT. Therefore, the first STA requests to join the second broadcast rTWT in a process of requesting a low-latency service from the first AP. This reduces signaling overheads.

A sixth aspect of this application provides a radio frame sending method, including:
A first AP generates a third frame, where the third frame includes first broadcast TWT identifier information, and the first broadcast TWT identifier information indicates first broadcast rTWT that a first STA may join; or the third frame includes a TWT element, the TWT element includes second information, and the second information indicates that service data corresponding to a first TID may be transmitted in the first broadcast rTWT. The first AP sends the third frame to the first STA.

In the foregoing technical solution, the first AP may directly indicate, based on the third frame, the first broadcast rTWT that the first STA may join, or indicate, based on the third frame, a TID corresponding to the service data that may be transmitted in the first broadcast rTWT, so that the first STA can determine, based on the third frame, that the first STA may join the first broadcast rTWT. The first STA no longer needs to exchange a TWT setup frame with the first AP to negotiate to join broadcast rTWT and negotiate TID information corresponding to a service that the first STA expects to transmit in the broadcast rTWT. This greatly reduces signaling interaction, and improves efficiency of joining rTWT by a STA. That is, according to the technical solutions of this application, a process in which each STA negotiates with an AP to join corresponding broadcast rTWT is avoided. This reduces signaling interaction, and improves efficiency of joining the broadcast rTWT by the STA.

With reference to the sixth aspect, in a first implementation of this application, the third frame further includes second indication information, and the second indication information indicates that the third frame includes the first broadcast TWT identifier information.

In this implementation, the third frame further includes the second indication information, to indicate that the third frame includes the first broadcast TWT identifier information. Therefore, the solution is applicable to a scenario in which a system includes a compatible STA and the STA does not support TWT.

With reference to the sixth aspect and the first implementation of this application, in a second implementation of this application, the third frame is an SCS response frame, the SCS response frame includes a request type field, and the second indication information and the first broadcast TWT identifier information are carried in the request type field.

In this implementation, the request type field of the SCS response frame is a reserved field, and the first AP may carry the second indication information and the broadcast TWT identifier information in the request type field of the SCS response frame. This helps improve bit utilization, and a new field does not need to be redefined.

With reference to any one of the sixth aspect, the first implementation of this application, and the second implementation of this application, in a third implementation of this application, the third frame is the SCS response frame, the SCS request frame includes the TWT element, and the first broadcast TWT identifier information is carried in the TWT element.

In this implementation, the SCS response frame may include the TWT element, and the TWT element may carry the first broadcast TWT identifier information, to indicate, to the first STA, the first broadcast rTWT that the first STA may join.

With reference to any one of the sixth aspect and the first implementation to the third implementation of this application, in a fourth implementation of this application, a value of a negotiation type subfield of the TWT element of the SCS response frame is set to 3.

With reference to any one of the sixth aspect and the first implementation to the fourth implementation of this application, in a fifth implementation of this application, the method further includes:
The first AP receives an SCS request frame from the first STA, where the SCS request frame includes a TWT element, the TWT element of the SCS request frame includes second broadcast TWT identifier information, and the second broadcast TWT identifier information indicates second broadcast rTWT that the first STA joins.

In this implementation, the first AP receives the SCS request frame from the first STA. The SCS request frame may include the TWT element. The first STA may carry the second broadcast TWT identifier information in the TWT element, to request to join the second broadcast rTWT. Therefore, the first STA requests to join the second broadcast rTWT in a process of requesting a low-latency service from the first AP. This reduces signaling overheads.

A seventh aspect of this application provides a link using method, including:
A non-AP multi-link device receives a fourth frame from an AP multi-link device, where the fourth frame includes a TID-to-link mapping element, the TID-to-link mapping element includes third information, and the third information indicates whether the AP multi-link device separately allows use of a plurality of links between the non-AP multi-link device and the AP multi-link device, or the third information indicates TIDs that are determined by the AP multi-link device and that are respectively mapped to the plurality of links. The non-AP multi-link device determines, based on the third information and fourth information, that a first link is allowed to be used for transmission, where the fourth information indicates whether the non-AP multi-link device separately allows use of the plurality of links. Alternatively, the non-AP multi-link device determines, based on the third information and fourth information, that a first link is allowed to be used to transmit data corresponding to a first TID, where the fourth information indicates TIDs that are determined by the non-AP multi-link device and that are respectively mapped to the plurality of links.

In the foregoing technical solution, the non-AP multi-link device receives a TID-to-link mapping scheme from the AP multi-link device, so that the non-AP multi-link device can determine, based on the TID-to-link mapping scheme of the AP multi-link device, a link that can be used for transmission, thereby using the link. The AP multi-link device may more flexibly control the TID-to-link mapping scheme based on a requirement of the AP multi-link device, to flexibly control data transmission. This improves a delay of a low-latency service, and further improves communication transmission performance. In the foregoing technical solution, multi-link devices do not need to perform negotiation for multiple times based on a TID-to-link mapping request frame and a TID-to-link mapping response frame. This avoids signaling overheads caused by multiple times of negotiation.

With reference to the seventh aspect, in a first implementation of this application, the method further includes:
The non-AP multi-link device sends a fifth frame to the AP multi-link device, where the fifth frame includes a TID-to-link mapping element, the TID-to-link mapping element includes fourth information, and the fourth information indicates whether the non-AP multi-link device separately allows use of the plurality of links between the non-AP multi-link device and the AP multi-link device, or the fourth information indicates TIDs that are determined by the non-AP multi-link device and that are respectively mapped to the plurality of links between the non-AP multi-link device and the AP multi-link device.

With reference to the seventh aspect and the first implementation of this application, in a second implementation of this application, that the non-AP multi-link device determines, based on the third information and fourth information, that a first link is allowed to be used for transmission includes:
When the third information indicates that the AP multi-link device allows use of the first link, and the fourth information indicates that the non-AP multi-link device allows use of the first link, the non-AP multi-link device determines that the first link is allowed to be used for transmission.

In the foregoing implementation, the AP multi-link device and the non-AP multi-link device can separately enable or disable a link. However, the link is allowed to be used to transmit data, only when both the AP multi-link device and the non-AP multi-link device enable the link.

With reference to any one of the seventh aspect, the first implementation of this application, and the second implementation of this application, in a third implementation of this application, that the non-AP multi-link device determines, based on the third information and fourth information, that a first link is allowed to be used to transmit data corresponding to a first TID includes:
When the third information indicates that the AP multi-link device maps the first TID to the first link, and the fourth information indicates that the non-AP multi-link device maps the first TID to the first link, the non-AP multi-link device determines that the first link is allowed to be used to transmit the data corresponding to the first TID.

In the foregoing implementation, the AP multi-link device and the non-AP multi-link device can separately map a TID to a link. However, the link is allowed, only when both the AP multi-link device and the non-AP multi-link device allow the TID to be mapped to the link, to transmit data of the TID.

With reference to any one of the seventh aspect and the first implementation to the third implementation of this application, in a fourth implementation of this application, the fourth frame includes a TID-to-link mapping notify frame or a beacon frame.

An eighth aspect of this application provides a link using method, including:
An AP multi-link device receives a fifth frame from a non-AP multi-link device, where the fifth frame includes a TID-to-link mapping element, the TID-to-link mapping element includes fourth information, and the fourth information indicates whether the non-AP multi-link device separately allows use of a plurality of links between the non-AP multi-link device and the AP multi-link device, or the fourth information indicates TIDs that are determined by the non-AP multi-link device and that are respectively mapped to a plurality of links between the non-AP multi-link device and the AP multi-link device. The AP multi-link device determines, based on third information and the fourth information, that a first link is allowed to be used for transmission, where the third information indicates whether the AP multi-link device separately allows use of the plurality of links between the non-AP multi-link device and the AP multi-link device. Alternatively, the non-AP multi-link device determines, based on third information and the fourth information, that a first link is allowed to be used to transmit data corresponding to a first TID, where the third information indicates TIDs that are determined by the AP multi-link device and that are respectively mapped to the plurality of links.

In the foregoing technical solution, the AP multi-link device receives a TID-to-link mapping scheme from the non-AP multi-link device, so that the AP multi-link device can determine, based on the TID-to-link mapping scheme of the non-AP multi-link device, a link that can be used for transmission, thereby using the link. In the foregoing technical solution, multi-link devices do not need to perform negotiation for multiple times based on a TID-to-link mapping request frame and a TID-to-link mapping response frame. This avoids signaling overheads caused by multiple times of negotiation.

With reference to the eighth aspect, in a first implementation of this application, that the AP multi-link device determines, based on third information and the fourth information, that a first link is allowed to be used for transmission includes:
When the third information indicates that the AP multi-link device allows use of the first link, and the fourth information indicates that the non-AP multi-link device allows use of the first link, the AP multi-link device determines that the first link is allowed to be used for transmission.

In the foregoing implementation, the AP multi-link device and the non-AP multi-link device can separately enable or disable a link. However, the link is allowed to be used to transmit data, only when both the AP multi-link device and the non-AP multi-link device enable the link.

With reference to the eighth aspect and the first implementation of this application, in a second implementation of this application, that the AP multi-link device determines, based on third information and the fourth information, that a first link is allowed to be used to transmit data corresponding to a first TID includes:
When the third information indicates that the AP multi-link device maps the first TID to the first link, and the fourth information indicates that the non-AP multi-link device maps the first TID to the first link, the AP multi-link device determines that the first link is allowed to be used to transmit the data corresponding to the first TID.

In the foregoing implementation, the AP multi-link device and the non-AP multi-link device can separately map a TID to a link. However, the link is allowed, only when both the AP multi-link device and the non-AP multi-link device allow the TID to be mapped to the link, to transmit data of the TID.

With reference to any one of the eighth aspect, the first implementation of this application, and the second implementation of this application, in a third implementation of this application, the fourth frame includes a TID-to-link mapping notify frame.

A ninth aspect of this application provides a first communication apparatus, including:
a sending unit, configured to send a first frame to a second communication apparatus, where the first frame includes expected priority information, and the expected priority information is a service priority that is of a first service and that the first communication apparatus expects to request; and
a receiving unit, configured to receive a second frame from the second communication apparatus, where the second frame includes first priority information, and the first priority information indicates a service priority determined by the second communication apparatus for the first service.

A tenth aspect of this application provides a second communication apparatus, including:
a receiving unit, configured to receive a first frame from a first communication apparatus, where the first frame includes expected priority information, and the expected priority information is a service priority that is of a first service and that the first communication apparatus expects to request; and
a sending unit, configured to send a second frame to the first communication apparatus, where the second frame includes first priority information, and the first priority information indicates a service priority determined by the second communication apparatus for the first service.

With reference to the ninth aspect or the tenth aspect, in a first implementation of this application, the expected priority information includes TID information that the first communication apparatus expects to request.

With reference to any one of the ninth aspect, the tenth aspect, and the first implementation of this application, in a second implementation of this application, the first priority information includes target TID information, and the target TID information is TID information determined by the second communication apparatus for the first service.

With reference to any one of the ninth aspect, the tenth aspect, the first implementation of this application, and the second implementation of this application, in a third implementation of this application, the target TID information further indicates AC information corresponding to the first service, and there is a mapping relationship between the target TID information and the AC information.

With reference to any one of the ninth aspect, the tenth aspect, and the first implementation to the third implementation of this application, in a fourth implementation of this application, the first priority information further includes AC information determined by the second communication apparatus for the first service.

With reference to any one of the ninth aspect, the tenth aspect, and the first implementation to the fourth implementation of this application, in a fifth implementation of this application, the second frame is an SCS response frame, and the AC information is carried in a reserved bit of an intra-access category priority element of the SCS response frame, or the AC information is carried in a request type field of the SCS response frame.

With reference to any one of the ninth aspect, the tenth aspect, and the first implementation to the fifth implementation of this application, in a sixth implementation of this application, the second frame is the SCS response frame, and the target TID information is carried in the reserved bit of the intra-access category priority element of the SCS response frame, the target TID information is carried in a user priority field of the intra-access category priority element of the SCS response frame, or the target TID information is carried in the request type field of the SCS response frame.

With reference to any one of the ninth aspect, the tenth aspect, and the first implementation to the sixth implementation of this application, in a seventh implementation of this application, the second frame further includes first broadcast TWT identifier information, and the first broadcast TWT identifier information indicates first broadcast rTWT that the first communication apparatus may join.

With reference to the seventh implementation, in an eighth implementation of this application, the second frame further includes first indication information, and the first indication information indicates that the second frame includes the first broadcast TWT identifier information.

With reference to the eighth implementation, in a ninth implementation of this application, the second frame is the SCS response frame, and the first indication information and the first broadcast TWT identifier information are carried in the request type field of the SCS response frame.

With reference to the seventh implementation, in a tenth implementation of this application, the first frame is an SCS request frame, the SCS request frame includes a TWT element, the TWT element of the SCS request frame includes second broadcast TWT identifier information, and the second broadcast TWT identifier information indicates second broadcast rTWT that the first communication apparatus requests to join.

With reference to the tenth implementation, in an eleventh implementation of this application, a value of a negotiation type subfield of the TWT element of the SCS response frame is set to 3.

With reference to the seventh implementation and the tenth implementation, in a twelfth implementation of this application, the first frame is the SCS request frame, the SCS request frame includes the TWT element, the TWT element of the SCS request frame includes the second broadcast TWT identifier information, and the second broadcast TWT identifier information indicates the second broadcast rTWT that the first communication apparatus requests to join.

With reference to any one of the seventh implementation to the twelfth implementation of this application, in a thirteenth implementation of this application, the first communication apparatus further includes a processing unit.

The processing unit is configured to actively initiate a channel access in a period other than the first broadcast rTWT.

With reference to any one of the ninth aspect, the tenth aspect, and the first implementation to the thirteenth implementation of this application, in a fourteenth implementation of this application, the first frame is the SCS request frame, and the second frame is the SCS response frame.

An eleventh aspect of this application provides a first communication apparatus, including:
a transceiver unit, configured to receive first information from a second communication apparatus, where the first information indicates a mapping rule of a service priority; and
a processing unit, configured to determine a service priority of a first service according to the mapping rule.

With reference to the eleventh aspect, in a first implementation of this application, the mapping rule includes a rule of mapping between a service and a TID and between the service and an AC.

The processing unit is specifically configured to:
determine, according to the mapping rule, a TID corresponding to the first service and an AC corresponding to the first service.

With reference to any one of the eleventh aspect, the first implementation of this application, and the second implementation of this application, in a second implementation of this application, the mapping rule includes a rule of mapping between a delay bound of a service and a TID and an AC of the service.

The processing unit is specifically configured to:
determine, based on a delay bound of the first service and the mapping rule, a TID corresponding to the first service and an AC corresponding to the first service.

With reference to any one of the eleventh aspect, the first implementation of this application, and the second implementation of this application, in a third implementation of this application, the first information is carried in a beacon frame or a probe response frame.

A twelfth aspect of this application provides a second communication apparatus, including:
a processing unit, configured to determine a mapping rule of a service priority; and
a transceiver unit, configured to send first information to a first communication apparatus, where the first information indicates the mapping rule of the service priority.

With reference to the twelfth aspect and the first implementation of this application, the mapping rule includes a rule of mapping between a service and a TID and between the service and an AC.

With reference to any one of the twelfth aspect, the first implementation of this application, and the second implementation of this application, in a third implementation of this application, the mapping rule includes a rule of mapping between a delay bound of a service and a TID and an AC of the service.

With reference to any one of the twelfth aspect, the first implementation of this application, and the second implementation of this application, in a third implementation of this application, the first information is carried in a beacon frame or a probe response frame.

A thirteenth aspect of this application provides a first communication apparatus, including:
a transceiver unit, configured to receive a third frame from a second communication apparatus, where the third frame includes first broadcast TWT identifier information, and the first broadcast TWT identifier information indicates first broadcast rTWT that the first communication apparatus may join; or the third frame includes a TWT element, the TWT element includes second information, and the second information indicates that service data corresponding to a first TID may be transmitted in the first broadcast rTWT; and
a processing unit, configured to join the first broadcast rTWT based on the third frame.

With reference to the thirteenth aspect, in a first implementation of this application, the processing unit is further configured to:
actively initiate a channel access in a period other than the first broadcast rTWT.

With reference to the thirteenth aspect and the first implementation, in a second implementation of this application, the third frame further includes second indication information, and the second indication information indicates that the third frame includes the first broadcast TWT identifier information.

With reference to any one of the thirteenth aspect, the first implementation, and the second implementation, in a third implementation of this application, the third frame is an SCS response frame, the SCS response frame includes a request type field, and the second indication information and the first broadcast TWT identifier information are carried in the request type field.

With reference to any one of the thirteenth aspect and the first implementation to the third implementation, in a fourth implementation of this application, the third frame is the SCS response frame, the SCS request frame includes the TWT element, and the first broadcast TWT identifier information is carried in the TWT element.

With reference to any one of the thirteenth aspect and the first implementation to the fourth implementation, in a fifth implementation of this application, a value of a negotiation type subfield of the TWT element of the SCS response frame is set to 3.

With reference to any one of the thirteenth aspect and the first implementation to the fourth implementation, in a sixth implementation of this application, the transceiver unit is further configured to:
send an SCS request frame to a first AP, where the SCS request frame includes a TWT element, the TWT element of the SCS request frame includes second broadcast TWT identifier information, and the second broadcast TWT identifier information indicates second broadcast rTWT that the first communication apparatus join.

A fourteenth aspect of this application provides a second communication apparatus, including:
a processing unit, configured to generate a third frame, where the third frame includes first broadcast TWT identifier information, and the first broadcast TWT identifier information indicates first broadcast rTWT that a first communication apparatus may join; or the third frame includes a TWT element, the TWT element includes second information, and the second information indicates that service data corresponding to a first TID may be transmitted in the first broadcast rTWT; and
a transceiver unit, configured to send the third frame.

With reference to the fourteenth aspect, in a first implementation of this application, the third frame further includes second indication information, and the second indication information indicates that the third frame includes the first broadcast TWT identifier information.

With reference to the fourteenth aspect and the first implementation of this application, in the first implementation of this application, the third frame is an SCS response frame, the SCS response frame includes a request type field, and the second indication information and the first broadcast TWT identifier information are carried in the request type field.

With reference to any one of the fourteenth aspect, the first implementation of this application, and the second implementation of this application, in a third implementation of this application, the third frame is the SCS response frame, the SCS response frame includes the TWT element, and the first broadcast TWT identifier information is carried in the TWT element.

With reference to any one of the fourteenth aspect and the first implementation to the third implementation of this application, in a fourth implementation of this application, a value of a negotiation type subfield of the TWT element of the SCS response frame or a TWT element of an SCS request frame is set to 3.

With reference to any one of the fourteenth aspect and the first implementation to the fourth implementation of this application, in a fifth implementation of this application, the transceiver unit is further configured to:
receive the SCS request frame from the first communication apparatus, where the SCS request frame includes the TWT element, the TWT element of the SCS request frame includes second broadcast TWT identifier information, and the second broadcast TWT identifier information indicates second broadcast rTWT that the first communication apparatus joins.

A fifteenth aspect of this application provides a first communication apparatus, including:
a transceiver unit, configured to receive a fourth frame from a second communication apparatus, where the fourth frame includes a TID-to-link mapping element, the TID-to-link mapping element includes third information, and the third information indicates whether the second communication apparatus separately allows use of a plurality of links between the first communication apparatus and the second communication apparatus, or the third information indicates TIDs that are determined by the second communication apparatus and that are respectively mapped to the plurality of links; and
a processing unit, configured to: determine, based on the third information and fourth information, that a first link is allowed to be used for transmission, where the fourth information indicates whether the first communication apparatus separately allows use of the plurality of links; or determine, based on the third information and fourth information, that a first link is allowed to be used to transmit data corresponding to a first TID, where the fourth information indicates TIDs that are determined by the first communication apparatus and that are respectively mapped to the plurality of links.

With reference to the fifteenth aspect, in a first implementation of this application, the transceiver unit is further configured to:
send a fifth frame to the second communication apparatus, where the fifth frame includes a TID-to-link mapping element, the TID-to-link mapping element includes fourth information, and the fourth information indicates whether the first communication apparatus separately allows use of the plurality of links between the first communication apparatus and the second communication apparatus, or the fourth information indicates TIDs that are determined by the first communication apparatus and that are respectively mapped to the plurality of links between the first communication apparatus and the second communication apparatus.

With reference to the fifteenth aspect and the first implementation of this application, in a second embodiment of this application, the processing unit is specifically configured to:
when the third information indicates that the second communication apparatus allows use of the first link, and the fourth information indicates that the first communication apparatus allows use of the first link, determine that the first link is allowed to be used for transmission.

With reference to the fifteenth aspect, the first implementation of this application, and the second implementation of this application, in a third embodiment of this application, the processing unit is specifically configured to:
when the third information indicates that the second communication apparatus maps the first TID to the first link, and the fourth information indicates that the first communication apparatus maps the first TID to the first link, determine that the first link is allowed to be used to transmit the data corresponding to the first TID.

With reference to any one of the fifteenth aspect and the first implementation to the third implementation of this application, in a fourth embodiment of this application, the fourth frame includes a TID-to-link mapping notify frame or a beacon frame.

A sixteenth aspect of this application provides a second communication apparatus, including:
a transceiver unit, configured to receive a fifth frame from a first communication apparatus, where the fifth frame includes a TID-to-link mapping element, the TID-to-link mapping element includes fourth information, and the fourth information indicates whether the first communication apparatus separately allows use of a plurality of links between the first communication apparatus and a second communication apparatus, or the fourth information indicates TIDs that are determined by the first communication apparatus and that are respectively mapped to the plurality of links between the first communication apparatus and the second communication apparatus; and
a processing unit, configured to: determine, based on third information and the fourth information, that a first link is allowed to be used for transmission, where the third information indicates whether the second communication apparatus separately allows use of the plurality of links between the first communication apparatus and the second communication apparatus; or determine, based on third information and the fourth information, that a first link is allowed to be used to transmit data corresponding to a first TID, where the third information indicates TIDs that are determined by the second communication apparatus and that are respectively mapped to the plurality of links.

With reference to the sixteenth aspect, in a first implementation of this application, the processing unit is specifically configured to:
when the third information indicates that the second communication apparatus allows use of the first link, and the fourth information indicates that the first communication apparatus allows use of the first link, determine that the first link is allowed to be used for transmission.

With reference to the sixteenth aspect and the first implementation of this application, in a second implementation of this application, the processing unit is specifically configured to:
when the third information indicates that the second communication apparatus maps the first TID to the first link, and the fourth information indicates that the first communication apparatus maps the first TID to the first link, determine that the first link is allowed to be used to transmit the data corresponding to the first TID.

With reference to any one of the sixteenth aspect, the first implementation of this application, and the second implementation of this application, in a third implementation of this application, the fourth frame includes a beacon frame.

A seventeenth aspect of this application provides a communication apparatus. The communication apparatus includes a processor and a memory. The memory stores a computer program or computer instructions, and the processor is configured to invoke and run the computer program or the computer instructions stored in the memory, so that any one of the implementations of the first aspect to the eighth aspect is performed.

Optionally, the communication apparatus further includes a transceiver, and the processor is configured to control the transceiver to receive and send a signal.

An eighteenth aspect of this application provides a communication apparatus. The communication apparatus includes a processor. The processor is configured to invoke a computer program or computer instructions in a memory, so that any one of the implementations of the first aspect to the eighth aspect is performed.

Optionally, the communication apparatus further includes a transceiver, and the processor is configured to control the transceiver to receive and send a signal.

A nineteenth aspect of this application provides a computer program product including instructions. When the computer program product runs on a computer, any one of the implementations of the first aspect to the eighth aspect is performed.

A twentieth aspect of this application provides a computer-readable storage medium, including computer instructions. When the computer instructions are run on a computer, any one of the implementations of the first aspect to the eighth aspect is performed.

A twenty-first aspect of this application provides a chip apparatus, including a processor, configured to invoke a computer program or computer instructions in a memory, so that any one of the implementations of the first aspect to the eighth aspect is performed.

Optionally, the chip apparatus further includes the memory. The memory is configured to store the computer program or the computer instructions. The chip apparatus may include a chip, or may include a chip and another discrete component.

Optionally, the processor is coupled to the memory through an interface.

A twenty-second aspect of this application provides a communication system. The communication system includes the first communication apparatus in the ninth aspect and the second communication apparatus in the tenth aspect. Alternatively, the communication system includes the first communication apparatus in the eleventh aspect and the second communication apparatus in the twelfth aspect. Alternatively, the communication system includes the first communication apparatus in the thirteenth aspect and the second communication apparatus in the fourteenth aspect. Alternatively, the communication system includes the first communication apparatus in the fifteenth aspect and the second communication apparatus in the sixteenth aspect.

It can be learned from the foregoing technical solutions that embodiments of this application have the following advantages:
It can be learned from the foregoing technical solutions that, the first STA sends the first frame to the first access point AP, where the first frame includes the expected priority information, and the expected priority information is the service priority that is of the first service and that the first STA expects to request; and the first STA receives the second frame from the first AP, where the second frame includes the first priority information, and the first priority information indicates the service priority determined by the first AP for the first service. It can be learned that, in the technical solutions of this application, the first AP determines, for the first STA, the service priority corresponding to the first service, that is, the first AP finally determines the service priority to which the first service is mapped. It can be learned that, in the technical solutions of this application, the AP determines the service priority corresponding to the service of the STA, and the STA does not determine the service priority corresponding to the service of the STA. This helps ensure fairness of low-latency service transmission of different STAs. For example, for the low-latency services that have the same QoS requirement and that are respectively of the STA 1 and the STA 2, the first AP may map the low-latency service of the STA 1 and the low-latency service of the STA 2 to the same TID, to improve or ensure fairness of low-latency service transmission of the STAs.

### BRIEF DESCRIPTION OF DRAWINGS

FIG. 1 is a schematic diagram of an architecture of a wireless communication system according to an embodiment of this application;
FIG. 2 is a schematic diagram of another architecture of a wireless communication system according to an embodiment of this application;
FIG. 3 is a schematic diagram of a structure of a multi-link device according to an embodiment of this application;
FIG. 4 is a schematic diagram of a format of an SCS request frame according to an embodiment of this application;
FIG. 5 is a schematic diagram of a format of an SCS response frame according to an embodiment of this application;
FIG. 6 is a schematic diagram of a format of a TWT setup frame according to an embodiment of this application;
FIG. 7 is a schematic diagram of a format of a TID-to-link mapping element field according to an embodiment of this application;
FIG. 8 is a schematic diagram of an embodiment of a service priority determining method according to an embodiment of this application;
FIG. 9A is a schematic diagram of carrying first indication information and broadcast TWT identifier information in a request type field of an SCS response frame according to an embodiment of this application;
FIG. 9B is a schematic diagram of carrying a broadcast rTWT indication subfield in a request type field of an SCS response frame according to an embodiment of this application;
FIG. 10 is a schematic diagram of a format of an SCS descriptor included in an SCS response frame or an SCS request frame according to an embodiment of this application;
FIG. 11 is a schematic diagram of another embodiment of a service priority determining method according to an embodiment of this application;
FIG. 12 is a schematic diagram of an embodiment of a radio frame sending method and a radio frame receiving method according to an embodiment of this application;
FIG. 13 is a schematic diagram of an embodiment of a link using method according to an embodiment of this application;
FIG. 14 is a schematic diagram of a scenario of a link using method according to an embodiment of this application;
FIG. 15 is a schematic diagram of another scenario of a link using method according to an embodiment of this application;
FIG. 16 is a schematic diagram of a structure of a first communication apparatus according to an embodiment of this application;
FIG. 17 is a schematic diagram of a structure of a second communication apparatus according to an embodiment of this application;
FIG. 18 is a schematic diagram of another structure of a first communication apparatus according to an embodiment of this application;
FIG. 19 is a schematic diagram of another structure of a second communication apparatus according to an embodiment of this application;
FIG. 20 is a schematic diagram of another structure of a first communication apparatus according to an embodiment of this application; and
FIG. 21 is a schematic diagram of another structure of a second communication apparatus according to an embodiment of this application.

### DESCRIPTION OF EMBODIMENTS

The following clearly and completely describes the technical solutions in embodiments of this application with reference to accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate a, b, c, "a and b", "a and c", "b and c", or "a, b, and c". a, b, and c each may be singular or plural.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the term "example", "in an example", "for example", or the like is intended to present a concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element indicated in a singular form is intended to indicate "one or more" or "at least one", but does not indicate "one and only one", unless otherwise specified.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions provided in this application are applicable to a WLAN scenario. For example, the technical solutions provided in this application are applicable to an IEEE 802.11 system standard, for example, the 802.11a/b/g standard, the 802.11n standard, then 802.11ac standard, the 802.11ax standard, the 802.11be standard, or a future-generation Wi-Fi standard.

Although embodiments of this application are mainly described by using an example in which a WLAN network is deployed, especially a network to which the IEEE 802.11 system standard is applied, a person skilled in the art easily understands that various aspects of this application may be extended to other networks that use various standards or protocols, for example, Bluetooth (Bluetooth), a high-performance radio LAN (high-performance radio LAN, HIPERLAN) (a wireless standard similar to the IEEE 802.11 standard, mainly used in Europe), a wide area network, (WAN), a personal area network (personal area network, PAN), or another network that is known or developed in future. Therefore, regardless of a used coverage area and wireless access protocol, various aspects provided in this application are applicable to any suitable wireless network.

Alternatively, embodiments of this application may be applied to a wireless local area network system, for example, an internet of things (internet of things, IoT) or a vehicle-to-everything (Vehicle to X, V2X) network. Certainly, embodiments of this application may be further applied to other possible communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for descriptions, and the communication systems applicable to this application are not limited thereto. This is uniformly described herein, and details are not described below again.

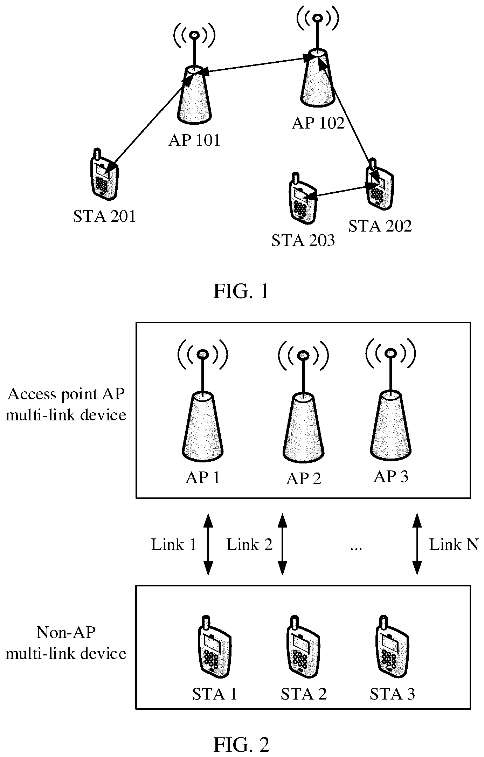

Refer to FIG. 1. FIG. 1 is a schematic diagram of an architecture of a wireless communication system according to an embodiment of this application.

As shown in FIG. 1, the wireless communication system may include one or more APs (for example, an AP 101 and an AP 102 in FIG. 1) and one or more STAs (for example, a STA 201, a STA 202, and a STA 203 in FIG. 1). Both the AP and the STA support a WLAN communication protocol. The WLAN communication protocol may include 802.11be (or referred to as Wi-Fi 7, or the EHT protocol), and may further include protocols such as 802.11ax and 802.11ac. Certainly, with continuous evolution and development of communication technologies, the WLAN communication protocol may further include a next-generation protocol of 802.11be, and the like. This is not limited herein. A WLAN is used as an example. An apparatus for implementing the method in this application may be an AP or a STA in the WLAN, or a processor, chip or processing system installed in the AP or the STA.

Optionally, the access point (for example, the AP 101 or the AP 102 in FIG. 1) in this application is an apparatus having a wireless communication function, supports communication by using a WLAN protocol, has a function of communicating with another device (for example, a station or another access point) in the WLAN network. It is clear that the access point may further have a function of communicating with another device. In a WLAN system, the access point may be referred to as an access point station (AP STA). The apparatus having the wireless communication function may be an entire device, or may be a chip, a processing system, or the like installed in the entire device. The device in which the chip or the processing system is installed may implement methods and functions in embodiments of this application under control of the chip or the processing system. The AP in embodiments of this application is an apparatus that provides a service for the STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the methods and the functions in embodiments of this application.

Optionally, the station (for example, the STA 201, the STA 202, or the STA 203 in FIG. 1) in this application is an apparatus having a wireless communication function, supports communication by using a WLAN communication protocol, and has a capability of communicating with another station or an access point in the WLAN network. In the WLAN system, the station may be referred to as a non-AP STA. For example, the STA is any user communication device that allows a user to communicate with an AP and further communicate with the WLAN. The apparatus having the wireless communication function may be an entire device, or may be a chip, a processing system, or the like installed in the entire device. The device in which the chip or the processing system is installed may implement methods and functions in embodiments of this application under control of the chip or the processing system. For example, the STA may be user equipment that can be connected to the internet, for example, a tablet computer, a desktop computer, a laptop computer, a notebook computer, an ultra-mobile personal computer (Ultra-mobile personal computer, UMPC), a handheld computer, a netbook computer, a personal digital assistant (personal digital assistant, PDA), or a mobile phone. Alternatively, the STA may be an internet of things node in an internet of things, an in-vehicle communication apparatus in an internet of vehicles, an entertainment device, a game device or system, a global positioning system device, or the like. Alternatively, the STA may be a chip and a processing system in the foregoing terminals. Specific forms of the STA and the AP are not limited in embodiments of this application, and are merely examples for description herein.

In addition, the technical solutions of this application may also be applied to a multi-link transmission scenario. In this case, the wireless communication system includes at least one access point multi-link device and at least one non-AP multi-link device. The non-AP multi-link device may also be referred to as a station multi-link device. As shown in FIG. 2, the access point multi-link device may include one or more APs (which may also be referred to as access point multi-link devices (access point multi-link devices, AP MLDs)). The non-AP multi-link device includes one or more STAs (which may also be referred to as non-access point multi-link devices (non-access point multi-link devices, non-AP MLDs)). The access point multi-link device and the station multi-link device may be collectively referred to as a multi-link device. A frequency band on which the multi-link device operates may be any one of the following frequency bands: all or a part of 1 GHz, 2.4 GHz, 5 GHz, 6 GHz, a high frequency 60 GHz, and the like.

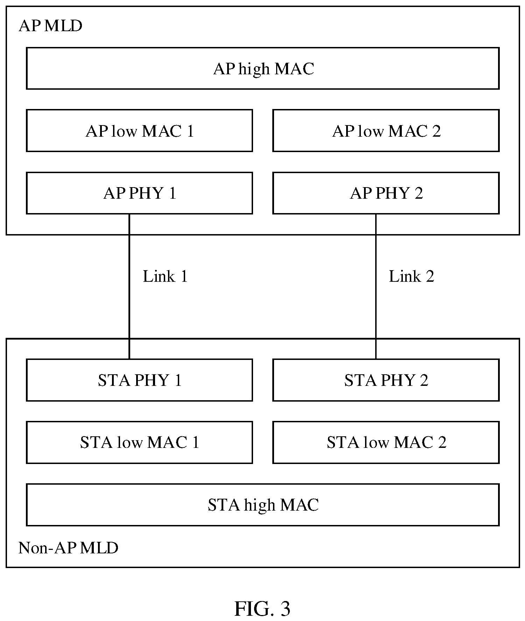

FIG. 3 is a schematic diagram of a structure of the multi-link device. A structure of each of the AP MLD and the non-AP MLD in embodiments of this application may include a media access control (media access control, MAC) layer and a physical (physical, PHY) layer. The MAC layer is further divided into a high MAC (high MAC) layer and a low MAC (low MAC) layer. Specifically, a plurality of APs in the AP MLD share one AP high MAC, and each AP corresponds to one AP low MAC. A plurality of STAs in the non-AP MLD share one STA high MAC, and each AP corresponds to one STA low MAC. An AP PHY of each AP in the AP MLD communicates with a STA PHY of one STA in a corresponding non-AP MLD through a link.

A low delay is an important feature of the 802.11be standard. The STA may report a low-latency service to the AP according to an SCS mechanism. In the 802.11be standard, the AP and the STA may be multi-link devices, to achieve higher throughput, thereby reducing a transmission delay of a data packet. The AP may further set up TWT for low-latency service transmission, to reduce interference of another service to the low-latency service, thereby reducing a delay of the low-latency service.

The following describes a process in which the STA reports the low-latency service to the AP according to the SCS mechanism. The process includes the following steps.

Step 1: The STA sends an SCS request (SCS Request) frame to the AP.

The SCS request frame is used to report the low-latency service to the AP. The SCS request frame includes a QoS parameter of the low-latency service and a traffic identifier (traffic identifier, TID) to which the low-latency service is mapped and that the STA expects to request.

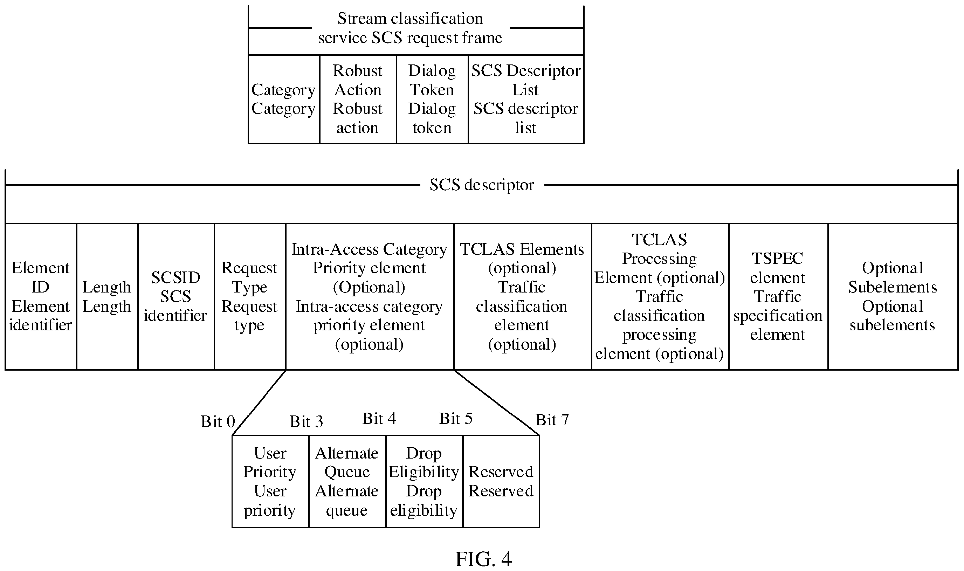

The following describes a format of the SCS request frame with reference to FIG. 4. FIG. 4 is a schematic diagram of the format of the SCS request frame according to this embodiment of this application. Refer to FIG. 4. The SCS request frame includes the following fields: a category (Category) field, a robust action (Robust Action) field, a dialog token (Dialog Token) field, and an SCS descriptor list (SCS Descriptor List) field.

The category (category) field indicates a category to which the SCS request frame belongs. The robust action field indicates that the SCS request frame is a frame in the category to which the SCS request frame belongs. An SCS descriptor list includes one or more SCS descriptors.

In the format of the SCS descriptor shown in FIG. 4, the SCS descriptor includes an element identifier (Element ID) field, a length (Length) field, an SCS identifier (SCSID) field, a request type field, an intra-access category priority element (Intra-Access Category Priority element) field, and a traffic specification element (TSPEC element) field. Optionally, the SCS descriptor further includes a traffic classification element (TCLAS element) field, a traffic classification processing element (TCLAS Processing element) field, and an optional subelement (Optional Subelement) field.

The SCS identifier field indicates a traffic identifier allocated to a traffic flow of the low-latency service. A length of the SCS identifier field may be 1 byte.

The request type field indicates a type of a request, for example, add (Add (0)), remove (Remove (1)), and change (Change (2)). A length of the request type field may be 1 byte.

The intra-access category priority element field includes the following subfields: a user priority (User Priority) field, an alternate queue (Alternate Queue) field, a drop eligibility (Drop Eligibility) field, and a reserved field.

The user priority field indicates a user priority. A length of the user priority field may be 3 bits. It should be noted that the TID and the user priority keep being set to a same value under an enhanced distributed channel access (Enhanced Distribution Channel Access, EDCA). In the technical solutions of this application, the TID and the user priority are not distinguished.

The alternate queue field indicates whether to create a new alternate queue for the traffic flow. A length of the alternate queue field may be 1 bit.

The drop eligibility field indicates whether a data packet of the traffic flow can be dropped when resources are insufficient. A length of the discard resource field may be 1 bit.

The traffic classification element field indicates how to identify the traffic flow. A traffic classification element includes a criterion for determining the traffic flow.

The traffic classification processing field indicates how to process a plurality of traffic classification elements when there are the plurality of traffic classification elements.

A traffic specification element indicates information such as a TID to which the traffic flow is mapped and a QoS parameter corresponding to the traffic flow. The QoS parameter of the traffic flow includes a delay bound and a packet delivery ratio (Packet Delivery Ratio). The delay bound indicates a maximum delay allowed by a low-delay packet. The packet delivery ratio indicates a packet delivery ratio required by a given delay bound.

Step 2: The AP sends an SCS response frame to the STA.

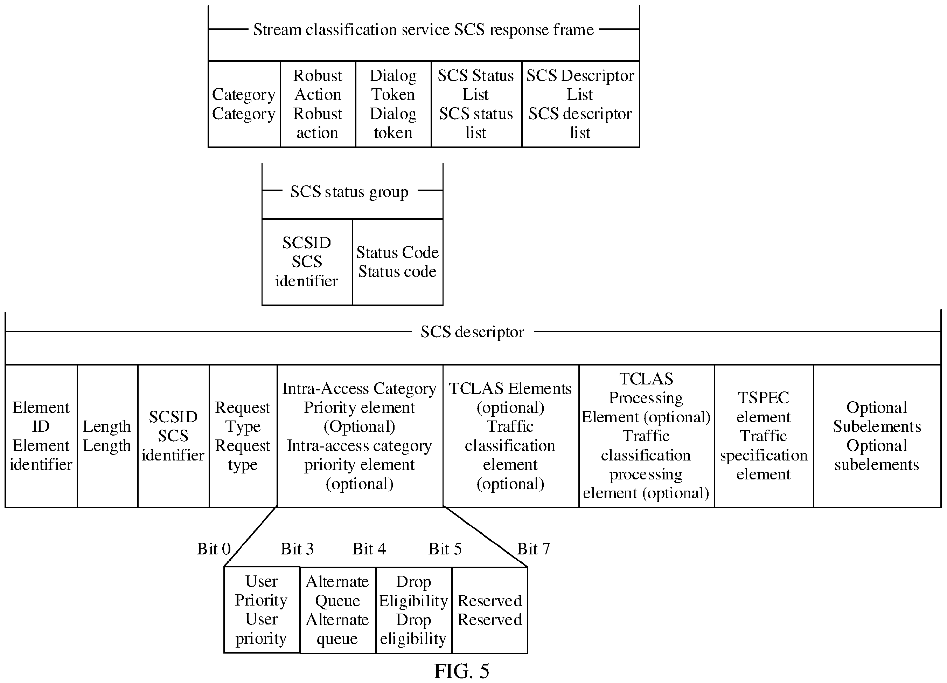

After the AP receives the SCS request frame sent by the STA, the AP feeds back the SCS response frame to the STA. The following describes a format of the SCS response frame with reference to FIG. 5. As shown in FIG. 5, the SCS response frame includes a category field, a robust action field, a dialog token field, an SCS status list field, and an SCS descriptor list.

Functions of the category field and the robust action field are similar to those of the category field and the robust action field of the foregoing SCS request frame. For details, refer to the foregoing related descriptions.

A value of the dialog token field of the SCS response frame is consistent with a value of the dialog token field of the SCS request frame.

The SCS status list includes one or more SCS status groups. Each SCS status group includes the following two subfields: an SCS identifier field and an SCS status code field. The SCS identifier field indicates a traffic identifier of the traffic flow. The SCS status code field indicates whether a traffic identifier requested by the SCS request frame is accepted.

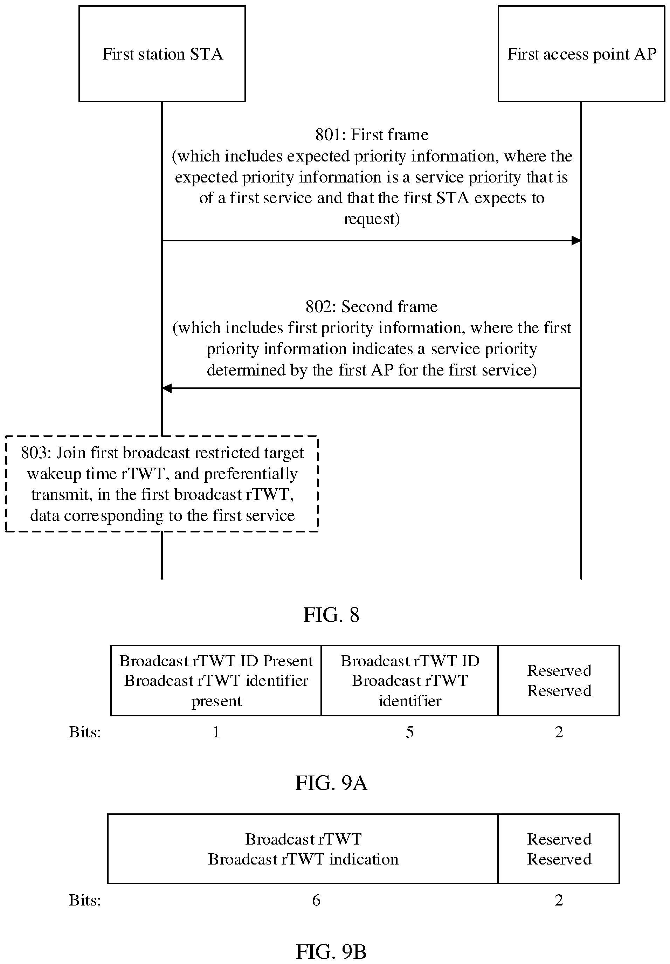

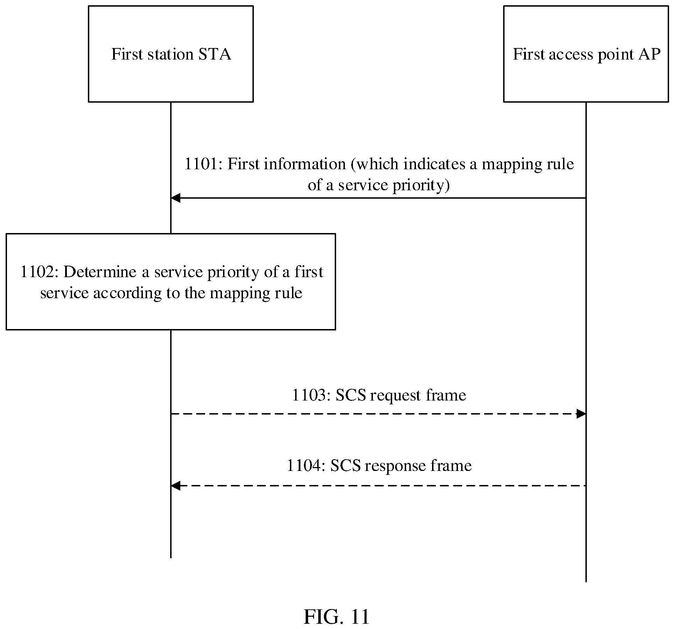

It can be learned from the foregoing process that the STA may report the low-latency service to the AP according to the SCS mechanism, to request to map the low-latency service to a corresponding TID. The TID indicates a service priority of the low-latency service, and different TIDs indicate different service priorities. It can be learned that STAs respectively map low-latency services to TIDs, resulting in poor fairness of low-latency service transmission. For example, for low-latency services having a same QoS requirement, a STA 1 maps the low-latency service to a TID 1, and a STA 2 maps the low-latency service to a TID 2. Actually, for the STA 1 and the STA 2, the low-latency services have the same QoS requirement, and need to correspond to a same service priority. Therefore, in a solution, the STAs respectively determine the TIDs to which the low-latency services are mapped, resulting in poor fairness of low-latency service transmission. To resolve the problem, this application provides a corresponding solution, to improve or ensure fairness of low-latency service transmission of different STAs. For details, refer to the technical solutions in embodiments shown in FIG. 8 and FIG. 11 below.

TWT is a technology defined in a Wi-Fi system for energy saving. A core idea is to set some periodic time periods, so that some devices need to stay active only in these time periods (namely, a TWT service period), and may sleep in another time period, thereby implementing energy saving. TWT is classified into individual TWT (Individual TWT) and broadcast TWT (Broadcast TWT). In the individual TWT, each STA may independently set up a TWT protocol with the AP. Therefore, each STA may have an active time period and a sleep time period. In the broadcast TWT, the AP may set up a public TWT protocol for a group of STAs, and a plurality of STAs operate in a same active time period and sleep in another time period. However, in Wi-Fi 7, the AP may set up TWT for low-latency service transmission, to reduce interference of another service to the low-latency service, thereby reducing a delay of the low-latency service. For a STA that supports the TWT, if the STA does not participate in the individual TWT, the STA can participate in the broadcast TWT. In addition, it is specified in an existing WLAN communication protocol that the STA cannot initiate a channel access in a period other than the broadcast TWT, thereby avoiding channel contention between STAs participating in different broadcast TWT.

In a series of standards such as 802.11be, based on an original TWT mechanism, broadcast TWT is newly defined for low-latency service transmission, and is specifically referred to as broadcast restricted target wake time (Broadcast Restricted TWT, rTWT). Specifically, the AP sets a broadcast TWT recommendation field to 4 to indicate that the broadcast TWT is rTWT. Because a STA (namely, a pre-EHT STA) or a legacy STA (legacy STA) that does not support the TWT cannot identify the value (namely, 4), the STA or the legacy STA that does not support the TWT does not attempt to join the broadcast rTWT. However, in the broadcast rTWT, the STA or the legacy STA keeps silent, and does not initiate a channel access.

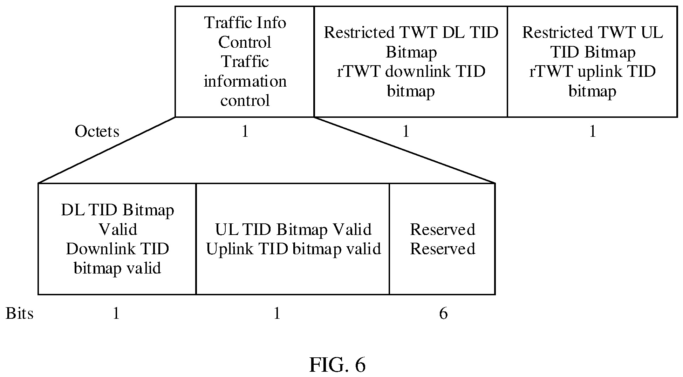

A STA that supports the rTWT may send a TWT setup frame (TWT Setup frame) to attempt to join the rTWT and carry TID information corresponding to a service that is expected to be transmitted in the rTWT. After receiving the TWT setup frame of the STA, the AP also feeds back a TWT setup frame to the STA. Specifically, as shown in FIG. 6, the AP feeds back the TWT setup frame to the STA. The TWT setup frame includes a traffic information control field, an rTWT downlink TID bitmap, and an rTWT uplink TID bitmap. The traffic information control field includes a downlink TID bitmap valid (DL TID Bitmap Valid) subfield, an uplink TID bitmap valid (UL TID Bitmap Valid) subfield, and a reserved field. The downlink TID bitmap valid subfield indicates whether a downlink traffic identifier bitmap is valid. The uplink TID bitmap valid subfield indicates whether an uplink traffic identifier bitmap is valid. The rTWT downlink TID bitmap indicates which downlink TID may be transmitted in the rTWT, and the rTWT uplink TID bitmap indicates which uplink TID may be transmitted in the rTWT.

It can be learned from the foregoing solution in which the STAs separately map the low-latency service to the corresponding TIDs based on the SCS mechanism that the STAs respectively determine the TIDs corresponding to the low-latency service, and consequently different STAs use different TIDs for a same low-latency service. Each STA needs to request to join rTWT by exchanging a TWT setup frame with an AP, and separately negotiates with the AP about a TID corresponding to service data that may be transmitted. This results in large signaling overheads and low efficiency of joining the rTWT by the STA.

The following describes a negotiation process of TID-to-link mapping (TID-to-link Mapping) between the access point multi-link device and the non-access point multi-link device. Specifically, the negotiation process includes the following steps.

Step A: A non-AP MLD sends a TID-to-link mapping request (TID-to-link Mapping Request) frame to an AP MLD. As shown in Table 1, the TID-to-link mapping request frame includes a category field, an EHT action field, a dialog token field, and a TID-to-link mapping element field.

**Table 1**

| Order | Information |
|---|---|
| 1 | Category (Category) |
| 2 | EHT action (EHT Action) |
| 3 | Dialog token (Dialog Token) |
| 4 | TID-to-link mapping element (TID-to-link Mapping element) |

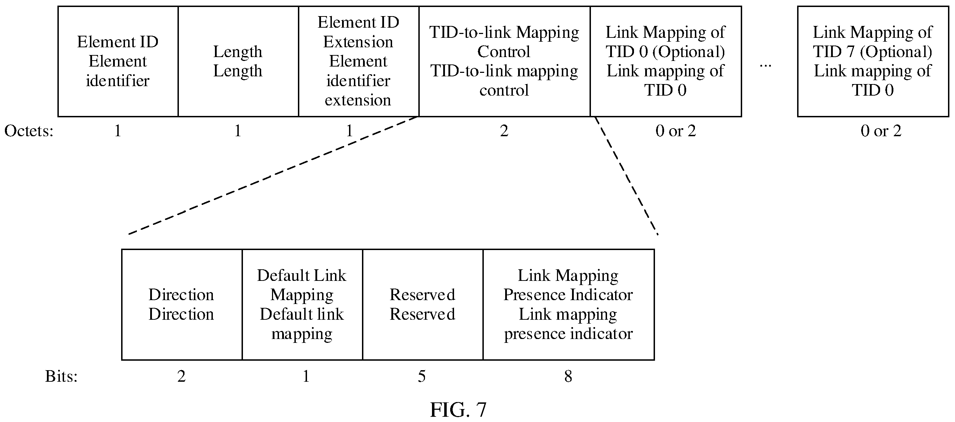

The following describes a format of the TID-to-link mapping element field with reference to FIG. 7. Refer to FIG. 7. FIG. 7 is a schematic diagram of the format of the TID-to-link mapping element field. The TID-to-link mapping element field includes an element identifier field, a length field, an element identifier extension field, a TID-to-link mapping control field, and a link mapping of TID 0 field to a link mapping of TID 7 field.

As shown in FIG. 7, the TID-to-link mapping control field includes a direction field, a default link mapping field, a reserved field, and a link mapping presence indicator field.

When a value of the direction field is set to 0, it indicates that the TID-to-link mapping request frame indicates an uplink; when a value of the direction field is set to 1, it indicates that the TID-to-link mapping request frame indicates a downlink; when a value of the direction field is set to 2, it indicates that the TID-to-link mapping request frame indicates an uplink and a downlink; or when a value of the direction field is set to 3, the value is indicated as a reserved value.

The default link mapping field indicates whether to map all TIDs to all links. When a value of the default link mapping field is set to 1, it indicates that all the TIDs are mapped to all the links.

The link mapping presence indicator field indicates whether link mapping of a TID #n corresponding to each TID is present. When the value of the default link mapping field is set to 1, the link mapping presence indicator field is reserved. Link mapping of the TID #n indicates whether to map the TID #n to a corresponding link. When a bit corresponding to the link mapping presence indicator field is set to 1, it indicates that the TID #n is mapped to the corresponding link.

Step B: The AP MLD sends a TID-to-link mapping response (TID-to-link Mapping Response) frame to the non-AP MLD. As shown in Table 2, the TID-to-link mapping response frame includes a category field, an EHT action field, a dialog token field, a status code (Status Code) field, and a TID-to-link mapping element field. The status code (Status Code) field indicates whether to accept or reject a request of the non-AP MLD. A format of the TID-to-link mapping element field is similar to the format shown in FIG. 7, and details are not described herein again.

**Table 2**

| Order | Information |
|---|---|
| 1 | Category (Category) |
| 2 | EHT action (EHT Action) |
| 3 | Dialog token (Dialog Token) |
| 4 | Status code (Status Code) |
| 5 | TID-to-link mapping element (TID-to-link Mapping element) |

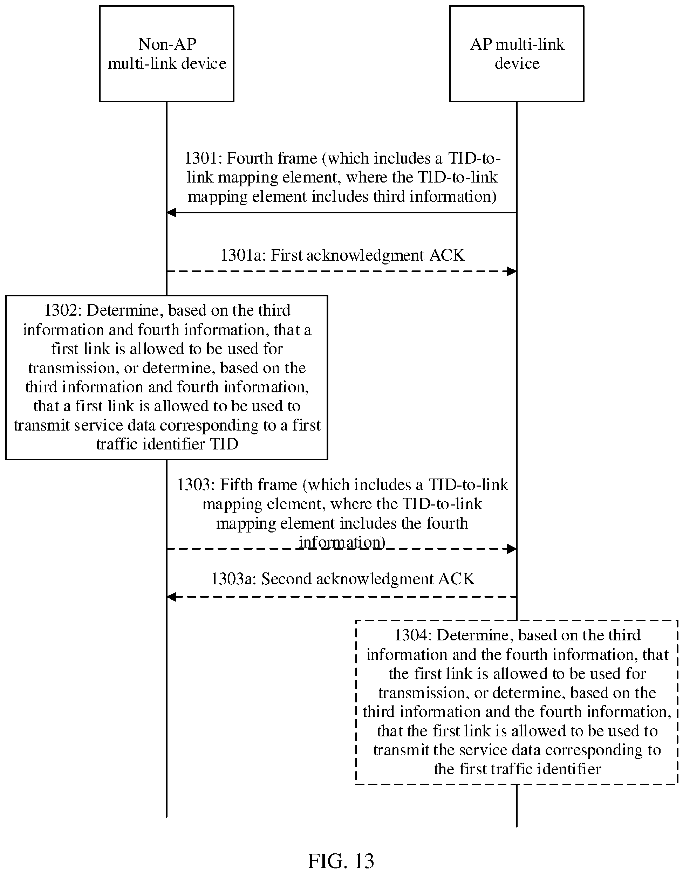

It can be learned from the foregoing process that, the non-AP MLD and the AP MLD perform negotiation for multiple times based on the TID-to-link mapping request frame and the TID-to-link mapping response frame, to implement use of the link. However, multiple times of negotiation may result in large signaling overheads and a waste of network resources. To resolve the problem, this application provides a corresponding solution, so that a link that can be used for transmission can be determined between multi-link devices without multiple times of negotiation. For details, refer to a technical solution of an embodiment shown in FIG. 13 below.

The following describes the technical solutions of this application by using specific embodiments.

FIG. 8 is a schematic diagram of an embodiment of a service priority determining method according to an embodiment of this application. Refer to FIG. 8. The service priority determining method includes the following steps.

801: A first STA sends a first frame to a first AP, where the first frame includes expected priority information, and the expected priority information is a service priority that is of a first service and that the first STA expects to request. Correspondingly, the first AP receives the first frame from the first STA.

Specifically, the first service may be a low-latency service. The first STA determines a service priority that corresponds to the first service and that is expected by the first STA, to obtain the expected priority information. That is, the expected priority information may be understood as a recommended service priority of the first service or the service priority that is of the first service and that the first STA expects to request. Then, the first STA generates the first frame, and sends the first frame to the first AP associated with the first STA, where the first frame includes the expected priority information.

In some implementations, the first frame is an SCS request frame. As shown in FIG. 4, the SCS request frame includes a traffic specification element, and the expected priority information may be carried in the traffic specification element.

Optionally, the expected priority information includes TID information that the first STA expects to request.

Specifically, a TID indicates a service priority corresponding to a service. The TID information that the first STA expects to request indicates the service priority that is of the first service and that the first STA expects to request. For example, as shown in FIG. 4, the TID information that the first STA expects to request may be carried in the traffic specification element.

Optionally, the first STA may map the first service to a corresponding TID according to a rule of mapping between a service of the first STA and a TID. Different STAs may map a service to corresponding TIDs according to different rules of mapping between a service and TIDs. This is not specifically limited in this application.

802: The first AP sends a second frame to the first STA, where the second frame includes first priority information, and the first priority information indicates a service priority determined by the first AP for the first service. Correspondingly, the first STA receives the second frame from the first STA.

Specifically, after the first AP receives the first frame, the first AP may determine the corresponding service priority for the first service, to obtain the first priority information. That is, the first priority information is a service priority finally determined by the first AP for the first service. Then, the first AP generates the second frame, and sends the second frame to the first STA, where the second frame includes the first priority information.

Optionally, the first priority information includes target TID information, and the target TID information is TID information determined by the first AP for the first service. In other words, the first AP may determine a target TID corresponding to the first service. The target TID may be the same as the TID that corresponds to the first service and that the first STA expects to request, or may be different from the TID that corresponds to the first service and that the first STA expects to request.

Specifically, the first AP may determine, according to the rule of mapping between the service and the TID, the target TID corresponding to the first service. For example, the rule of mapping between the service and the TID includes: Low-latency services having greatly different QoS requirements cannot be mapped to a same TID, and only services having a same or similar QoS requirement can be mapped to a same TID. For example, it may be specified in a WLAN communication protocol that, for non-low-latency services, an AP collectively maps the non-low-latency services to a TID 0. For a low-latency service, a STA negotiates with an AP according to an SCS mechanism, and the AP may map the low-latency service to one TID in a TID 1 to a TID 7 based on a QoS requirement of the low-latency service. That is, in step 801, for the first STA reporting a low-latency service to the first AP, the first AP may specify, in the second frame, a TID to which the low-latency service is finally mapped. For low-latency services reported by different STAs, the first AP may determine, according to a same rule of mapping between a service and a TID, a TID corresponding to the low-latency service. This ensures fairness of low-latency service transmission of the different STAs.

Optionally, only a service that is successfully added according to the SCS mechanism can be referred to as a low-latency service. A non-low-latency service and a low-latency service cannot be mapped to a same TID.

It should be noted that, optionally, the QoS requirement of the service may be represented by a delay bound and a packet delivery ratio of the service.

In some implementations, the second frame is an SCS response frame. For a specific format of the SCS response frame, refer to the schematic diagram shown in FIG. 5. A length of the target TID information may be 3 bits or 4 bits. Optionally, the target TID information may be carried in any one of the following of the SCS response frame.
1. The target TID information is carried in a reserved (reserved) bit of an intra-access category priority element of the SCS response frame.
   For example, as shown in FIG. 5, the intra-access category priority element of the SCS response frame includes the reserved bit, and the first AP may carry the target TID information in the reserved bit, thereby improving bit utilization.
2. The target TID information is carried in a user priority field of an intra-access category priority element of the SCS response frame.
   Specifically, the first AP may reuse the user priority field of the intra-access category priority element to carry the target TID information.
3. The target TID information is carried in a request type field of the SCS response frame.

Specifically, the request type field of the SCS response frame is currently a reserved field. Therefore, the first AP may carry the target TID information in the request type field.

In a possible implementation, the target TID information further indicates access category (access category, AC) information corresponding to the first service, and there is a mapping relationship between the target TID information and the AC information.

Four ACs are defined in the 802.11be standard: an access category background (access category background) AC_BK, an access category best effort (access category best effort) AC_BE, an access category video (access category video, AC_VI), and an access category voice (access category voice, AC_VO). Different ACs correspond to different values of channel access parameters. The channel access parameter includes a minimum contention window (minimum contention window, CWmin), a maximum contention window (maximum contention window, Cwmax), an arbitration inter-frame spacing number (arbitration inter-frame space, AIFSN), and a maximum transmission opportunity (maximum transmission opportunity, Max TXOP). Priorities of channel contention in a channel access process are directly determined based on the values of these channel access parameters. For example, as shown in Table 3, Table 3 shows values of channel access parameters respectively corresponding to four ACs.

**Table 3**

| Access category AC | Minimum contention window CWmin | Maximum contention window CWmax | Arbitration inter-frame spacing number AIFSN | Transmission opportunity limit TXOP limit |
|---|---|---|---|---|
| AC_BK | 31 | 1023 | 7 | 0 |
| AC_BE | 31 | 1023 | 3 | 0 |
| AC_VI | 15 | 31 | 2 | 3.008 ms (microseconds) |
| AC_VO | 7 | 15 | 2 | 1.504 ms |
| Legacy (legacy) | 15 | 1023 | 2 | 0 |

It can be seen from the foregoing Table 3 that, an AC with smaller values of channel access parameters corresponds to a higher priority of channel contention and a higher service priority. Therefore, an AC corresponding to the first service corresponding to the first STA may indicate the service priority of the first service to some extent.

Specifically, after the first STA receives the target TID information, the first STA may determine, based on the target TID information, the AC information corresponding to the first service, for example, a mapping relationship between a TID and an AC shown in Table 4. The first STA may determine, based on the mapping relationship shown in Table 4 and the target TID information, the AC information corresponding to the first service. For example, if the target TID information includes the TID 1, the first STA may determine, based on Table 4, AC_BK corresponding to the first service.

**Table 4**

| Traffic identifier TID | Access category AC |
|---|---|
| 1 | AC_BK |
| 2 | |
| 0 | AC_BE |
| 3 | |
| 4 | AC_VI |
| 5 | |
| 6 | AC_VO |
| 7 | |

In another possible implementation, the first priority information further includes AC information determined by the first AP for the first service. In other words, the first AP may carry the AC information corresponding to the first service in a delivery process of the second frame. The first AP may determine, based on Table 4, the AC information corresponding to the first service. Alternatively, the first AP may flexibly determine the AC information corresponding to the first service. That is, the mapping relationship between the TID and the AC may be flexible. Specifically, the first AP determines the mapping relationship between the TID and the AC.

Optionally, the second frame is the SCS response frame, and the AC information determined by the first AP for the first service is carried in the reserved bit of the intra-access category priority element of the SCS response frame, or the AC information determined by the first AP for the first service is carried in the request type field of the SCS response frame.

Specifically, the request type field of the SCS response frame is the reserved field. Therefore, the first AP may carry the AC information determined by the first AP for the first service in the request type field of the SCS response frame.

It can be learned that, in the technical solutions of this application, the first AP determines, for the first STA, the service priority corresponding to the first service, that is, the first AP finally determines the service priority to which the first service is mapped. It can be learned that, in the technical solutions of this application, the AP determines the service priority corresponding to the service of the STA, and the STA does not determine the service priority corresponding to the service of the STA. This helps improve or ensure fairness of low-latency service transmission of different STAs. For example, for low-latency services that have a same QoS requirement and that are respectively of a STA 1 and a STA 2, the first AP may map the low-latency service of the STA 1 and the low-latency service of the STA 2 to a same TID according to a same mapping rule, to ensure fairness of low-latency service transmission of different STAs.

In this application, the first AP may map services having a same or similar QoS requirement to a same TID. Currently, in the WLAN communication protocol, SN allocation, BA setup, and TID-to-link mapping negotiation are all based on a TID corresponding to a service. Therefore, according to the technical solutions of this application, the first AP may properly map the first service to the corresponding target TID, to ensure fairness of low-latency service transmission of the different STAs. Further, the first AP may determine the AC information corresponding to the first service. A priority of data of the service during a channel access is directly determined based on the AC information corresponding to the service. In this application, the first AP determines the corresponding AC information for the first service. This helps further ensure fairness of low-latency service transmission of the different STAs.

In some implementations, the second frame further includes first broadcast TWT identifier information, and the first broadcast TWT identifier information indicates first broadcast rTWT that the first STA may join.

Specifically, the first AP may determine, based on a traffic characteristic that is of a traffic flow of the first service and that is indicated in the traffic specification element of the SCS request frame, the first broadcast rTWT that the first STA may join. For example, the traffic characteristic of the traffic flow of the first service includes a minimum service interval and a maximum service interval of the traffic flow of the first service. The first broadcast rTWT may be broadcast rTWT that has been set up, or may be broadcast rTWT that has not been set up but is to be set up by the first AP. The first AP may send the first broadcast TWT identifier information to the first STA based on the second frame, where the first broadcast TWT identifier information indicates the first broadcast rTWT that the first STA may join.

In a possible implementation, the second frame is the SCS response frame, and the first broadcast TWT identifier information may be carried in the request type field of the SCS response frame.

In some implementations, there is an unsupported STA in a wireless communication system, or the first AP does not set up corresponding rTWT. In this case, the first AP does not indicate the first broadcast TWT identifier information. Therefore, the second frame may include corresponding indication information, to indicate whether the second frame includes the first broadcast TWT identifier information.

The following describes two possible implementations.

Implementation 1: The second frame further includes first indication information, and the first indication information indicates that the second frame includes the first broadcast TWT identifier information.

The first STA supports joining the broadcast rTWT, and the first AP has set up or is to set up corresponding broadcast rTWT. Therefore, the second frame includes the first broadcast TWT identifier information.

Optionally, the first indication information and the first broadcast TWT identifier information are carried in the request type field of the SCS response frame.

For example, as shown in FIG. 9A, the request type field includes a broadcast rTWT identifier present field, a broadcast rTWT identifier field, and a reserved field. The broadcast rTWT identifier present field indicates whether the broadcast rTWT identifier field is present. When a value of the broadcast rTWT identifier present field is 1, it indicates that the second frame includes the broadcast rTWT identifier field. When a value of the broadcast rTWT identifier present field is 0, it indicates that the second frame does not include the broadcast rTWT identifier field. The broadcast rTWT identifier field indicates the first broadcast rTWT that the first STA may join. Optionally, a length of the broadcast rTWT identifier present field may be 1 bit, and a length of the broadcast rTWT identifier field may be 5 bits.

Implementation 2: The second frame includes a broadcast rTWT indication subfield. The broadcast rTWT indication subfield indicates whether the second frame includes the first broadcast TWT identifier information and indicates the first broadcast rTWT that the first STA may join and that is indicated by the first broadcast TWT identifier information.

For example, as shown in FIG. 9B, the SCS response frame includes a request type field, and the request type field includes a broadcast rTWT indication subfield. A length of the broadcast rTWT indication subfield may be 6 bits. When a value of the broadcast rTWT indication subfield is 000000, it indicates that the second frame does not include the first broadcast rTWT identifier information. When a value of the broadcast rTWT indication subfield is 100100, it indicates that the second frame includes the first broadcast rTWT identifier information. The value of the broadcast rTWT indication subfield indicates the first broadcast rTWT that the first STA may join.

In another possible implementation, the second frame is the SCS response frame, the SCS response frame includes one or more TWT elements, and a value of a negotiation type (Negotiation Type) subfield of each TWT element is set to 3.

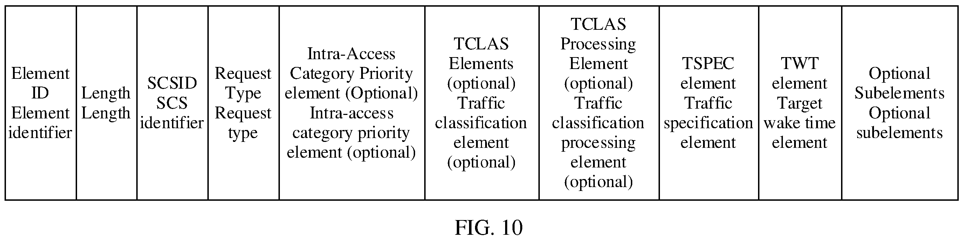

When the SCS response frame includes a plurality of TWT elements, one TWT element is included in one SCS descriptor in the SCS response frame, and different TWT elements are included in different SCS descriptors in the SCS response frame. For example, as shown in FIG. 10, the SCS descriptor includes a TWT element, and the TWT element carries corresponding broadcast TWT identifier information indicated by the first AP to the first STA. If the SCS response frame includes a plurality of TWT elements, the first AP indicates a plurality of pieces of broadcast TWT identifier information to the first STA. Each piece of broadcast TWT identifier information is carried in one TWT element, and different broadcast TWT identifier information is carried in different TWT elements. One TWT element is included in one SCS descriptor, and different TWT elements are included in different SCS descriptors. Broadcast TWT identifier information carried in one TWT element indicates one piece of broadcast rTWT. The first STA may transmit, in the broadcast rTWT, data corresponding to a service indicated by an SCS identifier in an SCS descriptor in which the TWT element is included. A manner in which the SCC response frame includes the plurality of TWT elements may be understood as that the first STA has a plurality of low-latency services, and the plurality of low-latency services may join different broadcast rTWT. Therefore, the first AP may separately indicate, based on the plurality of TWT elements of the SCS response frame, the broadcast rTWT that the low-latency services may respectively join.

When the SCS response frame includes one TWT element, the TWT element is carried in a frame body of the SCS response frame, but is carried outside an SCS descriptor in the SCS response frame. The TWT element carries the first broadcast TWT identifier information. It may be understood that, for example, the first STA has one low-latency service, and the first AP indicates, to the first STA, that the first STA may join the first broadcast rTWT based on the low-latency service. The following describes the technical solutions of this application by using a case in which the SCS response frame includes one TWT element and the first AP indicates the first broadcast TWT identifier information based on the TWT element.

Optionally, the embodiment shown in FIG. 8 further includes step 803. Step 803 may be performed after step 802.

803: The first STA joins the first broadcast rTWT, and preferentially transmits, in the first broadcast rTWT, data corresponding to the first service.

Specifically, after the first STA receives the second frame, the first STA may determine, based on the broadcast TWT identifier information in the second frame, the first broadcast rTWT that the first STA may join, and preferentially transmit, in the first broadcast rTWT, the data corresponding to the first service. The first STA may also actively initiate a channel access in a period other than the first broadcast rTWT. That is, in the period other than the first broadcast rTWT, the first STA does not need to be prohibited from actively initiating transmission. This helps reduce a delay of the low-latency service.

It can be learned that the first AP directly indicates, based on the second frame, the first broadcast rTWT that the first STA may join, and the first STA does not need to exchange a TWT setup frame with the first AP to negotiate to join broadcast rTWT and negotiate TID information corresponding to a service that the first STA expects to transmit in the broadcast rTWT. This greatly reduces signaling interaction, and improves efficiency of joining the rTWT by the STA. The first AP may send a beacon frame, where the beacon frame carries a TWT element, the TWT element includes second information, and the second information indicates a TID corresponding to service data that may be sent in the first broadcast rTWT. A STA that has a low-latency service with the TID indicated by the second information may initiate a channel access in the first broadcast rTWT. That is, according to the technical solutions of this application, a process in which each STA negotiates with an AP to join corresponding broadcast rTWT is avoided. This reduces signaling interaction, and improves efficiency of joining the broadcast rTWT by the STA.

In this embodiment of this application, the first STA sends the first frame to the first AP, where the first frame includes the expected priority information, and the expected priority information is the service priority that is of the first service and that the first STA expects to request. The first STA receives the second frame from the first AP, where the second frame includes the first priority information, and the first priority information indicates the service priority determined by the first AP for the first service. It can be learned that, in the technical solutions of this application, the first AP determines, for the first STA, the service priority corresponding to the first service. That is, the first AP finally determines the service priority to which the first service is mapped, and the STA does not determine the service priority corresponding to the service of the STA. This helps improve or ensure fairness of low-latency service transmission of STAs. For example, for the low-latency services that have the same QoS requirement and that are respectively of the STA 1 and the STA 2, the first AP may map the low-latency service of the STA 1 and the low-latency service of the STA 2 to the same TID, to ensure fairness of low-latency service transmission of the STAs.

FIG. 11 is a schematic diagram of another embodiment of a service priority determining method according to an embodiment of this application. Refer to FIG. 11. The service priority determining method includes the following steps.

1101: A first AP sends first information to a first STA. The first information indicates a mapping rule of a service priority. Correspondingly, the first STA receives the first information from the first AP.

Optionally, the first information may be carried in a beacon (Beacon) frame, carried in a probe response (probe response) frame, or carried in another broadcast frame. This is not specifically limited in this application.

Optionally, the mapping rule includes a rule of mapping between a service and a TID and between the service and an AC. In other words, the first AP provides a specific mapping rule for the first STA, so that the first STA maps a service to a corresponding TID and AC according to the mapping rule.

In a possible implementation, the mapping rule includes a rule of mapping between a delay bound of a service and a TID and between the delay bound of the service and an AC. In other words, the first STA may determine a TID and an AC of a service based on a delay bound of the service. For example, the mapping rule may be represented in Table 5 below.

**Table 5**

| Delay bound of the service (Delay Bound) | Traffic identifier TID | Access category AC |
|---|---|---|
| ≤10 ms (milliseconds) | 7 | AC_VO |
| ≤30 ms | 6 | AC_VI |
| ≤40 ms | 5 | AC_BE |
| ≤50 ms | 4 | AC_BK |

1102: The first STA determines a service priority of a first service according to the mapping rule.

Optionally, the mapping rule includes the rule of mapping between the service and the TID and between the service and the AC, and step 1102 specifically includes: The first STA determines, according to the mapping rule, a TID and an AC that correspond to the first service.

In a possible implementation, the mapping rule includes the rule of mapping between the delay bound of the service and the TID and between the delay bound of the service and the AC, and step 1102 specifically includes: The first STA determines, based on a delay bound of the first service and the mapping rule, the TID corresponding to the first service and the AC corresponding to the first service. For example, as shown in Table 5, if the delay bound of the first service is less than or equal to 10 ms, the first STA may determine, based on Table 5, that the first service corresponds to the TID 7 and the AC_VO.

Optionally, the embodiment shown in FIG. 11 further includes step 1103 and step 1104.

1103: The first STA sends an SCS request frame to the first AP.

Specifically, the first STA generates the SCS request frame, where the SCS request frame includes service priority information that is of the first service and that is determined by the first STA in step 1102. The service priority information of the first service indicates the service priority that is of the first service and that the first STA expects to request in step 1102.

Optionally, the service priority information of the first service includes the TID that corresponds to the first service and that is determined by the first STA according to the mapping rule.

1104: The first AP sends an SCS response frame to the first STA.

Step 1104 is similar to step 2 in the foregoing process in which the STA reports the low-latency service to the AP based on the SCS mechanism. For details, refer to the foregoing related descriptions.

That is, step 1103 and step 1104 are similar to the foregoing process in which the STA reports the low-latency service to the AP based on the SCS mechanism. A difference lies in that the first STA maps the first service to the corresponding TID according to the mapping rule indicated in step 1101, and then sends the SCS request frame. The SCS request frame includes the TID to which the first service is mapped and that is determined by the first STA according to the mapping rule.

In this embodiment of this application, the first AP sends the first information to the first STA, where the first information indicates the mapping rule of the service priority. The first STA determines the service priority of the first service according to the mapping rule. It can be learned that different STAs may respectively map services to corresponding TIDs according to a mapping rule broadcast by the first AP, to unify a rule of mapping between a low-latency service and a TID and between the low-latency service and an AC. Therefore, the different STAs determine, according to a same mapping rule, TIDs and ACs to which the services are mapped. This improves or ensures fairness of low-latency service transmission of the STAs.

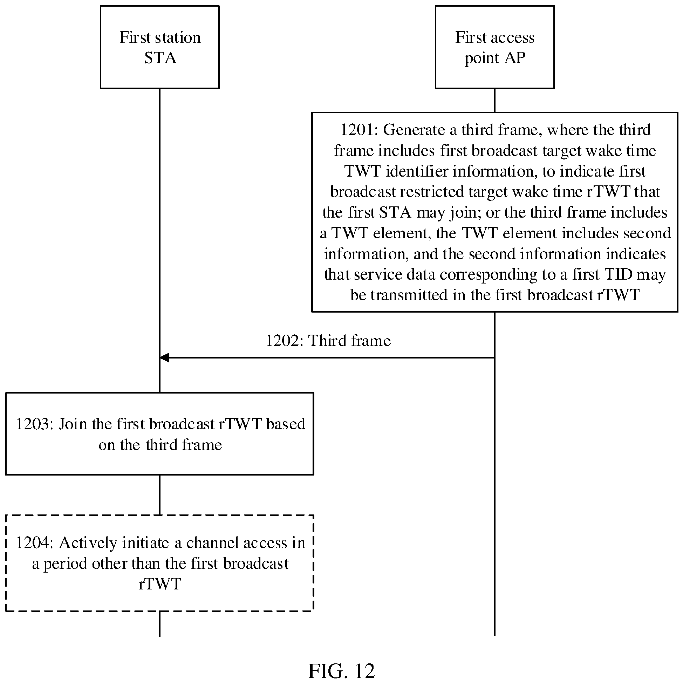

FIG. 12 is a schematic diagram of an embodiment of a radio frame sending method and a radio frame receiving method according to an embodiment of this application. Refer to FIG. 12. The method includes the following steps.

1201: A first AP generates a third frame.

The following describes two possible implementations of content included in the third frame.

Implementation 1: The third frame includes first broadcast TWT identifier information, and the first broadcast TWT identifier information indicates first broadcast rTWT that a first STA may join.

In this implementation, the first broadcast rTWT may be broadcast rTWT that has been set up, or may be broadcast rTWT that has not been set up but is to be set up by the first AP.

In a possible implementation, the third frame may be an SCS response frame, and the first broadcast TWT identifier information may be carried in a request type field of the SCS response frame. For related descriptions of the first broadcast TWT identifier information, refer to related descriptions of step 802 in the embodiment shown in FIG. 8. Details are not described herein again.

Optionally, the third frame may further include indication information indicating whether the third frame includes the first broadcast TWT identifier information. A specific implementation is similar to the two implementations in which the second frame indicates whether the broadcast TWT identifier information is included in step 802 in the embodiment shown in FIG. 8. For details, refer to the foregoing related descriptions.

In another possible implementation, the third frame is the SCS response frame, the third frame includes one or more TWT elements, and a value of a negotiation type subfield of each TWT element is set to 3.

When the third frame includes a plurality of TWT elements, one TWT element is included in one SCS descriptor in the third frame, different TWT elements are respectively included in different SCS descriptors in the third frame, and the TWT element is present in the SCS response frame only when an indication of a status code (Status Code) field of the SCS response frame succeeds. Broadcast TWT identifier information carried in one TWT element indicates one piece of broadcast rTWT. The first STA may transmit, in the broadcast rTWT, data corresponding to a service indicated by an SCS identifier in an SCS descriptor in which the TWT element is included.

For example, as shown in FIG. 10, the SCS descriptor includes a TWT element, and the TWT element carries corresponding broadcast TWT identifier information indicated by the first AP to the first STA. A manner in which the SCC response frame includes the plurality of TWT elements may be understood as that the first STA has a plurality of low-latency services, and the plurality of low-latency services may join different broadcast rTWT. Therefore, the first AP may separately indicate, based on the plurality of TWT elements of the SCS response frame, the broadcast rTWT that the low-latency services may respectively join.

When the third frame includes one TWT element, the TWT element is carried in a frame body of the third frame, but is carried outside an SCS descriptor. The TWT element carries the first broadcast TWT identifier information. It may be understood that the first STA has one low-latency service, and the first AP indicates, to the first STA, that the first STA may join the first broadcast rTWT based on the low-latency service. The following describes the technical solutions of this application by using an example in which the third frame includes one TWT element, and the first AP allocates one piece of broadcast rTWT to the first STA.

Based on this implementation, optionally, before 1201, the embodiment shown in FIG. 12 further includes: The first STA sends an SCS request frame to the first AP. The SCS request frame includes one or more TWT elements.

When the SCS request frame includes a plurality of TWT elements, one TWT element is included in one SCS descriptor in the SCS request frame, and different TWT elements are included in different SCS descriptors in the SCS request frame. Broadcast TWT identifier information carried in one TWT element indicates broadcast rTWT that the first STA requests to join. To be specific, the first STA requests to transmit, in the broadcast rTWT, data corresponding to a service indicated by an SCS identifier in an SCS descriptor in which the TWT element is included.

When the SCS request frame includes one TWT element, the TWT element is carried in a frame body of the SCS request frame, but is carried outside an SCS descriptor. The TWT element carries second broadcast TWT identifier information, and the second broadcast TWT identifier information is used by the first STA to request to join second broadcast rTWT. It may be understood that the first STA has one low-latency service, and the first STA requests the first AP to join the second broadcast rTWT in a process of requesting the low-latency service from the first AP, thereby reducing signaling overheads. The following describes the technical solution of this application by using a solution in which the SCS request frame includes one TWT element as an example.

Implementation 2: The third frame includes a TWT element, the TWT element includes second information, and the second information indicates that service data corresponding to a first TID may be transmitted in first broadcast rTWT.

In this implementation, the third frame may be a beacon frame, and the TWT element in the beacon frame includes the second information, indicate a TID corresponding to the service data that may be transmitted in the first broadcast rTWT. The first broadcast rTWT may be broadcast rTWT that has been set up, or may be broadcast rTWT that has not been set up but is to be set up by the first AP.

It should be noted that, in this application, the STA may map a service to a corresponding TID according to a same mapping rule of a service priority. For example, in the embodiment shown in FIG. 11, different STAs determine, according to a mapping rule broadcast by the first AP, a TID corresponding to a service. Therefore, the different STAs may map low-latency services having a same or similar QoS requirement to a same TID. In a case in which the different STAs use the same TID for the low-latency services having the same or similar QoS requirement, the first AP may unicast or broadcast a TID corresponding to service data that may be added to the first broadcast rTWT. Therefore, a process in which each STA performs one-to-one negotiation with an AP to join corresponding broadcast rTWT is avoided. This reduces signaling interaction, and improves efficiency of joining the broadcast rTWT by the STA.

1202: The first AP sends the third frame.

1203: A first STA joins the first broadcast rTWT based on the third frame.

For example, the third frame is an SCS response frame, and the first STA may determine the first broadcast rTWT based on first broadcast TWT identifier information carried in the third frame, and join the first broadcast rTWT. The first STA transmits, in the first broadcast rTWT, data corresponding to a corresponding low-latency service.

For example, the third frame is a beacon frame, and the first STA may determine, based on the second information, that the service data corresponding to the first TID may be added to the first broadcast rTWT. If the first STA may determine that a TID corresponding to a low-latency service of the first STA belongs to the first TID, the first STA joins the first broadcast rTWT. For example, the first TID includes a TID 2 and a TID 3. According to the embodiment shown in FIG. 8 or FIG. 11, if the first STA determines the TID 2 corresponding to the low-latency service of the first STA, the first STA may join the first broadcast rTWT. In other words, the first STA may transmit, in the first broadcast rTWT, the data corresponding to the corresponding low-latency service.

Optionally, the embodiment shown in FIG. 12 further includes step 1204. Step 1204 may be performed after step 1203.

1204: The first STA actively initiates a channel access in a period other than the first broadcast rTWT.

Step 1204 is similar to step 803 in the embodiment shown in FIG. 8. For details, refer to the related descriptions of step 803 in the embodiment shown in FIG. 8. Details are not described herein again.

In this embodiment of this application, the first AP may directly indicate, based on the third frame, the first broadcast rTWT that the first STA may join, or indicate, based on the third frame, a TID corresponding to the service data that may be transmitted in the first broadcast rTWT. The first STA may determine, based on the third frame, that the first STA may join the first broadcast rTWT. The first STA no longer needs to exchange a TWT setup frame with the first AP to negotiate to join broadcast rTWT and negotiate TID information corresponding to a service that the first STA expects to transmit in the broadcast rTWT. This greatly reduces signaling interaction, and improves efficiency of joining the rTWT by the STA. That is, according to the technical solutions of this application, a process in which each STA negotiates with an AP to join corresponding broadcast rTWT is avoided. This reduces signaling interaction, and improves efficiency of joining the broadcast rTWT by the STA.

FIG. 13 is a schematic diagram of an embodiment of a link using method according to an embodiment of this application. Refer to FIG. 13. The method includes the following steps.

1301: An AP multi-link device sends a fourth frame to a non-AP multi-link device, where the fourth frame includes a TID-to-link mapping element, and the TID-to-link mapping element includes third information. Correspondingly, the non-AP multi-link device receives the fourth frame from the AP multi-link device.

The following describes two possible indication manners of the third information.

Indication manner 1: The third information indicates whether the AP multi-link device separately allows use of a plurality of links between the non-AP multi-link device and the AP multi-link device.

Indication manner 2: The third information indicates TIDs that are determined by the AP multi-link device and that are respectively mapped to the plurality of links between the non-AP multi-link device and the AP multi-link device.

The AP multi-link device may disable a link for load balance or improvement of a delay of a low-latency service. The non-AP multi-link device may disable a link due to a reason such as an inaccessible link or poor link quality for reduction of energy consumption. Negotiation capabilities of mapping of a TID to two types of links are specified in a current protocol. A first negotiation capability is that a multi-link device supports mapping of a TID to a same link set or different link sets, for example, mapping of a TID 1 to a link 1 and a link 2, and mapping of a TID 2 to a link 2 and a link 3. A second negotiation capability is that a multi-link device supports only mapping of all TIDs to a same link set, for example, mapping of a TID 0 to a TID 7 to a link 1 and a link 2.

For the first negotiation capability, the AP multi-link device and the non-AP multi-link device can separately map a TID to a link. However, the link is allowed, only when both the AP multi-link device and the non-AP multi-link device allow the TID to be mapped to the link, to transmit data of the TID. In this case, the third information may indicate, in the foregoing indication manner 2, TIDs that are determined by the AP multi-link device and that are respectively mapped to the plurality of links.

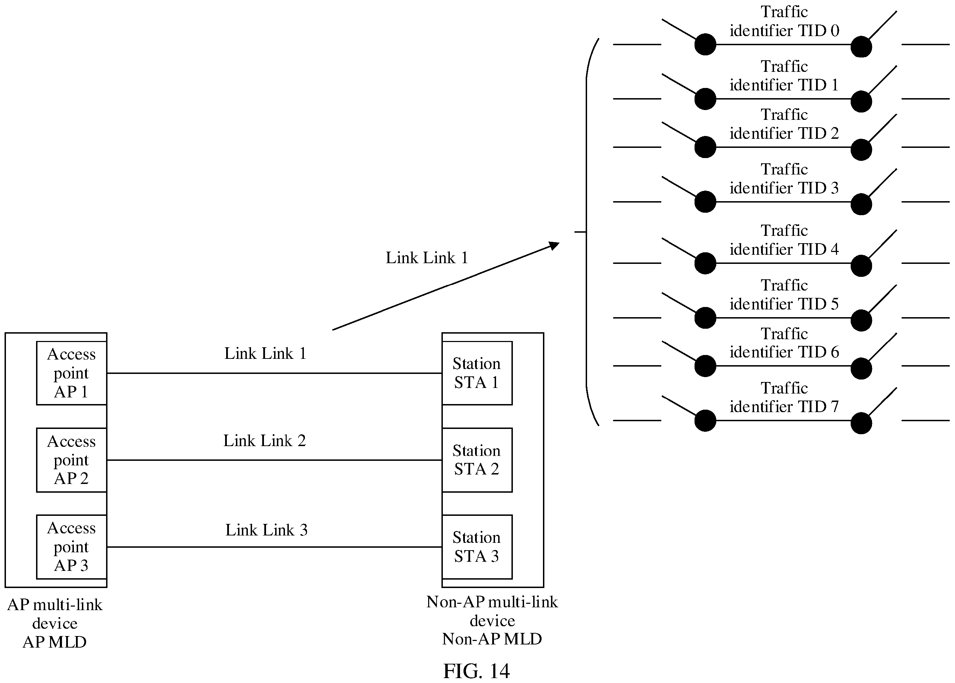

For example, as shown in FIG. 14, the AP multi-link device may indicate a TID that is mapped to each link in a link 1 to a link 3 and that is determined by the AP multi-link device. As shown in FIG. 14, if the AP multi-link device determines a TID 1 mapped to the link 1, the AP multi-link device may connect the link 1 and the corresponding TID 1. The same method is used for other links. Details are not described herein again.

For the second negotiation capability, the AP multi-link device and the non-AP multi-link device can separately enable or disable a link. However, the link is allowed to be used to transmit data, only when both the AP multi-link device and the non-AP multi-link device enable the link. In this case, the third information may indicate, in the foregoing indication manner 1, whether the AP multi-link device separately allows use of the plurality of links between the non-AP multi-link device and the AP multi-link device.

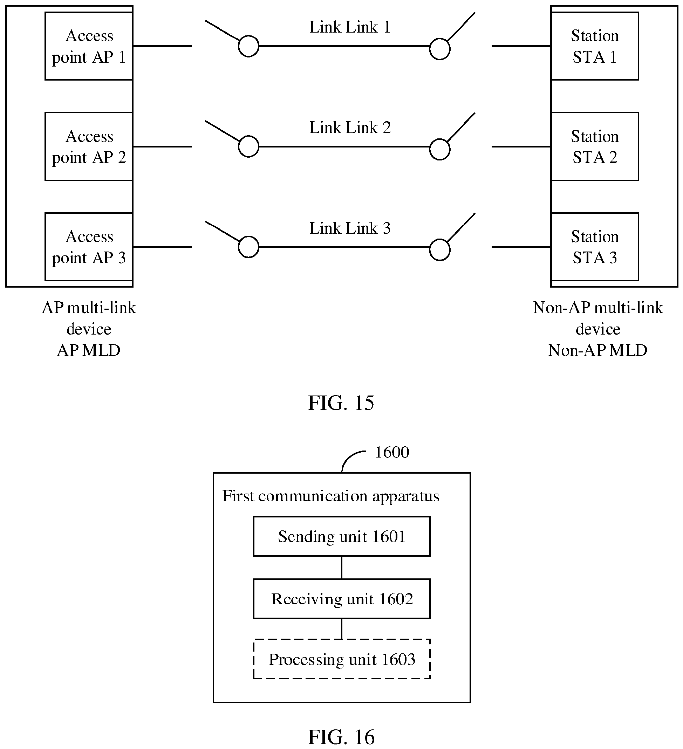

For example, as shown in FIG. 15, the AP multi-link device may indicate whether each link in the link 1 to the link 3 determined by the AP multi-link device is allowed to be used. As shown in FIG. 15, if the AP multi-link device determines that the link 1 is allowed to be used, the AP multi-link device may connect the link 1 and the AP multi-link device.

Optionally, the fourth frame may be a TID-to-link mapping notify (TID-to-link Mapping Notify) frame, a beacon frame, a probe response frame, or another broadcast frame. This is not specifically limited in this application. These frames each include a TID-to-link mapping element, to advertise a TID-to-link mapping (TID-to-link mapping) scheme of the AP multi-link device. The following describes a possible format of the TID-to-link mapping notify frame. As shown in Table 6, the TID-to-link mapping notify frame includes a category field, an EHT action field, a dialog token field, and a TID-to-link mapping notify element. The TID-to-link mapping notify element carries the third information.

**Table 6**

| Order | Information |
|---|---|
| 1 | Category (Category) |
| 2 | EHT action (EHT Action) |
| 3 | Dialog token (Dialog Token) |
| 4 | TID-to-link mapping element (TID-to-link Mapping element) |

All non-AP multi-link devices associated with the AP multi-link device need to comply with TID-to-link mapping (TID-to-link Mapping) sent by the AP multi-link device. When the TID-to-link mapping element of the AP multi-link device changes, the change is also critical update (critical update), and a corresponding BSS parameters change count (BSS parameters change count) needs to be increased by 1.

Optionally, the embodiment shown in FIG. 13 further includes step 1301a. Step 1301a may be performed after step 1301.

1301a: The non-AP multi-link device sends a first acknowledgment (acknowledgment, ACK) to the AP multi-link device. Correspondingly, the AP multi-link device receives the first ACK from the non-AP multi-link device.

Specifically, after the non-AP multi-link device receives the fourth frame of the AP multi-link device, the non-AP multi-link device may feed back the first ACK to the AP multi-link device, to indicate that the non-AP multi-link device successfully receives the fourth frame.

1302: The non-AP multi-link device determines, based on the third information and the fourth information, that the first link is allowed to be used for transmission; or the non-AP multi-link device determines, based on the third information and the fourth information, that the first link is allowed to be used to transmit service data corresponding to a first traffic identifier.

Based on the implementation in which the third information indicates whether the AP multi-link device separately allows use of the plurality of links between the non-AP multi-link device and the AP multi-link device, the non-AP multi-link device determines, based on the third information and the fourth information, that the first link is allowed to be used for transmission. The fourth information indicates whether the non-AP multi-link device separately allows use of the plurality of links between the non-AP multi-link device and the AP multi-link device.

For example, as shown in FIG. 15, if both the AP multi-link device and the non-AP multi-link device allow use of the link 1, the AP multi-link device may determine that the link 1 is allowed to be used for transmission. In other words, the AP multi-link device and link 1 are connected, and the non-AP multi-link device and the link 1 are also connected. The same method is used for other links. Details are not described herein again.

Based on the implementation in which the third information indicates the TIDs that are determined by the AP multi-link device and that are respectively mapped to the plurality of links, the non-AP multi-link device determines, based on the third information and the fourth information, that the first link is allowed to be used to transmit the service data corresponding to the first traffic identifier. The fourth information indicates the non-AP multi-link device to determine TIDs that are respectively mapped to the plurality of links.

For example, as shown in FIG. 14, if both the AP multi-link device and the non-AP multi-link device map the link 1 to the TID 1, the AP multi-link device may determine that the link 1 is allowed to transmit the service data corresponding to the TID 1. In other words, the AP multi-link device may connect the TID 1 corresponding to the link 1 connected to the AP multi-link device, and the non-AP multi-link device may connect the TID 1 corresponding to the link 1 connected to the non-AP multi-link device. The same method is used for other links. Details are not described herein again.

Optionally, the embodiment shown in FIG. 13 further includes step 1303 and step 1304. There is no fixed execution sequence between step 1303 and step 1304 and between step 1301 and step 1302. Step 1301 and step 1302 may be first performed, and then step 1303 and step 1304 are performed; step 1303 and step 1304 are first performed, and then step 1301 and step 1302 are performed; or step 1301 and step 1302 are performed while step 1303 and step 1304 are performed based on a situation. This is not specifically limited in this application.

1303: The non-AP multi-link device sends a fifth frame to the AP multi-link device, where the fifth frame includes a TID-to-link mapping element, and the TID-to-link mapping element includes the fourth information. Correspondingly, the AP multi-link device receives the fifth frame from the non-AP multi-link device.

In a possible implementation, the fourth information indicates whether the non-AP multi-link device separately allows use of the plurality of links between the non-AP multi-link device and the AP multi-link device. In another possible implementation, the fourth information indicates the TIDs that are determined by the non-AP multi-link device and that are respectively mapped to the plurality of links.

Step 1303 is similar to step 1301 in the foregoing figure. For details, refer to related descriptions of step 1301.

Optionally, in the foregoing step 1303, the fifth frame may be a TID-to-link mapping notify frame.

Optionally, the embodiment shown in FIG. 13 further includes step 1303a. Step 1303a may be performed after step 1303.

1303a: The AP multi-link device sends a second ACK to the non-AP multi-link device. Correspondingly, the non-AP multi-link device receives the second ACK from the AP multi-link device.

Step 1303a is similar to step 1301a. For details, refer to related descriptions of step 1301a.

1304: The non-AP multi-link device determines, based on the third information and the fourth information, that the first link is allowed to be used for transmission; or the non-AP multi-link device determines, based on the third information and the fourth information, that the first link is allowed to be used to transmit the service data corresponding to the first traffic identifier.

Step 1304 is similar to step 1302. For details, refer to related descriptions of step 1302.

It can be learned that, for the AP multi-link device, the AP multi-link device may more flexibly control a TID-to-link mapping scheme based on a requirement of the AP multi-link device, to flexibly control data transmission. This improves a delay of a low-latency service, and further improves communication transmission performance. According to the embodiment shown in FIG. 13, the non-AP multi-link device and the AP multi-link device respectively send TID-to-link mapping schemes that are respectively determined by the non-AP multi-link device and the AP multi-link device, so that the non-AP multi-link device and the AP multi-link device can respectively determine links that can be used for transmission, thereby using the link. In this way, multi-link devices do not need to perform negotiation for multiple times based on a TID-to-link mapping request frame and a TID-to-link mapping response frame. This avoids signaling overheads caused by multiple times of negotiation.

The following describes a first communication apparatus provided in embodiments of this application. Refer to FIG. 16. FIG. 16 is a schematic diagram of a structure of a first communication apparatus according to an embodiment of this application. The first communication apparatus 1600 may be configured to perform the steps performed by the first STA in the embodiment shown in FIG. 8. For details, refer to related descriptions in the method embodiment shown in FIG. 8.

The first communication apparatus 1600 includes a sending unit 1601 and a receiving unit 1602. Optionally, the first communication apparatus 1600 further includes a processing unit 1603. The sending unit 1601 is configured to perform a sending operation of the first STA in the method embodiment shown in FIG. 8, and the receiving unit 1602 is configured to perform a receiving operation of the first STA in the method embodiment shown in FIG. 8. The processing unit 1603 is configured to perform a processing operation of the first STA in the method embodiment shown in FIG. 8.

For example, the sending unit 1601 is configured to perform step 801 in the embodiment shown in FIG. 8, and the receiving unit 1602 is configured to perform step 802 in the embodiment shown in FIG. 8. Optionally, the processing unit 1603 is configured to perform step 803 in the embodiment shown in FIG. 8.

Specifically, the first communication apparatus 1600 may be configured to perform the following solutions:
The sending unit 1601 is configured to send a first frame to a second communication apparatus, where the first frame includes expected priority information, and the expected priority information is a service priority that is of a first service and that the first communication apparatus expects to request.

The receiving unit 1602 is configured to receive a second frame from the second communication apparatus, where the second frame includes first priority information, and the first priority information indicates a service priority determined by the second communication apparatus for the first service.

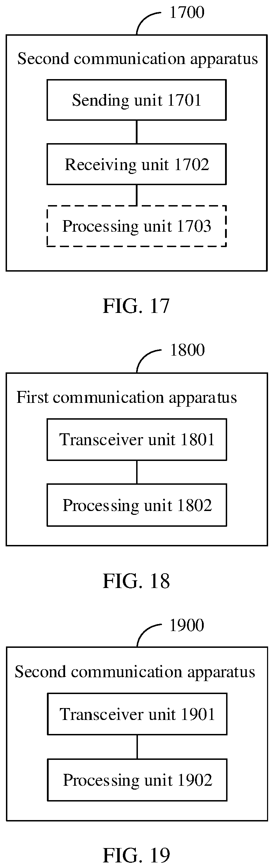

The following describes a second communication apparatus provided in embodiments of this application. Refer to FIG. 17. FIG. 17 is a schematic diagram of a structure of a second communication apparatus according to an embodiment of this application. The second communication apparatus 1700 may be configured to perform the steps performed by the first AP in the embodiment shown in FIG. 8. For details, refer to related descriptions in the method embodiment shown in FIG. 8.

The second communication apparatus 1700 includes a sending unit 1701 and a receiving unit 1702. Optionally, the second communication apparatus 1700 further includes a processing unit 1703. The sending unit 1701 is configured to perform a sending operation of the first AP in the method embodiment shown in FIG. 8, and the receiving unit 1702 is configured to perform a receiving operation of the first AP in the method embodiment shown in FIG. 8. The processing unit 1703 is configured to perform a processing operation of the first AP in the method embodiment shown in FIG. 8.

For example, the sending unit 1701 is configured to perform step 802 in the embodiment shown in FIG. 8, and the receiving unit 1702 is configured to perform step 801 in the embodiment shown in FIG. 8.

Specifically, the second communication apparatus 1700 may be configured to perform the following solutions:
The receiving unit 1702 is configured to receive a first frame from a first communication apparatus, where the first frame includes expected priority information, and the expected priority information is a service priority that is of a first service and that the first communication apparatus expects to request.

The sending unit 1703 is configured to send a second frame to the first communication apparatus, where the second frame includes first priority information, and the first priority information indicates a service priority determined by the second communication apparatus for the first service.

The following describes a first communication apparatus provided in embodiments of this application. Refer to FIG. 18. FIG. 18 is a schematic diagram of another structure of a first communication apparatus according to an embodiment of this application. The first communication apparatus 1800 may be configured to perform the steps performed by the first STA in the embodiments shown in FIG. 11 and FIG. 12, or the first communication apparatus 1800 may be configured to perform the steps performed by the non-AP multi-link device in the embodiment shown in FIG. 13. For details, refer to related descriptions in the foregoing method embodiments.

The first communication apparatus 1800 includes a transceiver unit 1801 and a processing unit 1802. The transceiver unit 1801 is configured to perform receiving and sending operations of the first STA in the embodiments shown in FIG. 11 and FIG. 12, and the processing unit 1802 is configured to perform processing operations of the first STA in the embodiments shown in FIG. 11 and FIG. 12. Alternatively, the transceiver unit 1801 is configured to perform receiving and sending operations of the non-AP multi-link device in the embodiment shown in FIG. 13, and the processing unit 1802 is configured to perform a processing operation of the non-AP multi-link device in the embodiment shown in FIG. 13.

Optionally, the transceiver unit 1801 may include a sending unit and a receiving unit. The sending unit is configured to perform sending operations of the first STA in the method embodiments shown in FIG. 11 and FIG. 12. The receiving unit is configured to perform receiving operations of the first STA in the method embodiments shown in FIG. 11 and FIG. 12. Alternatively, the sending unit is configured to perform a sending operation of the non-AP multi-link device in the method embodiment shown in FIG. 13. The receiving unit is configured to perform a receiving operation of the non-AP multi-link device in the method embodiment shown in FIG. 13.

It should be noted that the first communication apparatus 1800 may include the sending unit, but does not include the receiving unit, or the first communication apparatus 1800 may include the receiving unit, but does not include the sending unit. Specifically, this may depend on whether the foregoing solution performed by the first communication apparatus 1800 includes a sending action and a receiving action.

In an example, the first communication apparatus 1800 may be configured to perform an action performed by the first STA in the embodiment shown in FIG. 11. The first communication apparatus 1800 specifically includes:
a transceiver unit 1801, configured to receive first information from a second communication apparatus, where the first information indicates a mapping rule of a service priority; and
a processing unit 1802, configured to determine a service priority of a first service according to the mapping rule.

In an example, the first communication apparatus 1800 may be configured to perform an action performed by the first STA in the embodiment shown in FIG. 12. The first communication apparatus 1800 specifically includes:
a transceiver unit 1801, configured to receive a third frame from a second communication apparatus, where the third frame includes first broadcast TWT identifier information, and the first broadcast TWT identifier information indicates first broadcast rTWT that the first communication apparatus may join; or the third frame includes a TWT element, the TWT element includes second information, and the second information indicates that service data corresponding to a first TID may be transmitted in the first broadcast rTWT; and
a processing unit 1802, configured to join the first broadcast rTWT based on the third frame.

In an example, the first communication apparatus 1800 may be configured to perform an action performed by the non-AP multi-link device in the embodiment shown in FIG. 13. The first communication apparatus 1800 specifically includes:
a transceiver unit 1801, configured to receive a fourth frame from a second communication apparatus, where the fourth frame includes a TID-to-link mapping element, the TID-to-link mapping element includes third information, and the third information indicates whether the second communication apparatus separately allows use of a plurality of links between the first communication apparatus and the second communication apparatus, or the third information indicates TIDs that are determined by the second communication apparatus and that are respectively mapped to the plurality of links; and
a processing unit 1802, configured to: determine, based on the third information and fourth information, that a first link is allowed to be used for transmission, where the fourth information indicates whether the first communication apparatus separately allows use of the plurality of links; or determine, based on the third information and fourth information, that a first link is allowed to be used to transmit data corresponding to a first TID, where the fourth information indicates TIDs that are determined by the first communication apparatus and that are respectively mapped to the plurality of links.

The following describes a second communication apparatus provided in embodiments of this application. Refer to FIG. 19. FIG. 19 is a schematic diagram of another structure of a second communication apparatus according to an embodiment of this application. The second communication apparatus 1900 may be configured to perform the steps performed by the first AP in the embodiments shown in FIG. 11 and FIG. 12, or the second communication apparatus 1900 may be configured to perform the steps performed by the AP multi-link device in the embodiment shown in FIG. 13. For details, refer to related descriptions in the foregoing method embodiments.

The second communication apparatus 1900 includes a transceiver unit 1901 and a processing unit 1902. The transceiver unit 1901 is configured to perform receiving and sending operations of the first AP in the embodiments shown in FIG. 11 and FIG. 12, and the processing unit 1902 is configured to perform processing operations of the first AP in the embodiments shown in FIG. 11 and FIG. 12. Alternatively, the transceiver unit 1901 is configured to perform receiving and sending operations of the AP multi-link device in the embodiment shown in FIG. 13, and the processing unit 1902 is configured to perform a processing operation of the AP multi-link device in the embodiment shown in FIG. 13.

Optionally, the transceiver unit 1901 may include a sending unit and a receiving unit. The sending unit is configured to perform sending operations of the first AP in the method embodiments shown in FIG. 11 and FIG. 12. The receiving unit is configured to perform receiving operations of the first AP in the method embodiments shown in FIG. 11 and FIG. 12. Alternatively, the sending unit is configured to perform a sending operation of the AP multi-link device in the method embodiment shown in FIG. 13. The receiving unit is configured to perform a receiving operation of the AP multi-link device in the method embodiment shown in FIG. 13.

It should be noted that the second communication apparatus 1900 may include the sending unit, but does not include the receiving unit, or the second communication apparatus 1900 may include the receiving unit, but does not include the sending unit. Specifically, this may depend on whether the foregoing solution performed by the second communication apparatus 1900 includes a sending action and a receiving action.

In an example, the second communication apparatus 1900 may be configured to perform an action performed by the first AP in the embodiment shown in FIG. 11. The second communication apparatus 1900 specifically includes:
a processing unit 1902, configured to determine a mapping rule of a service priority; and
a transceiver unit 1901, configured to send first information to a first communication apparatus, where the first information indicates the mapping rule of the service priority.

In an example, the second communication apparatus 1900 may be configured to perform an action performed by the first AP in the embodiment shown in FIG. 12. The second communication apparatus 1900 specifically includes:
a processing unit 1902, configured to generate a third frame, where the third frame includes first broadcast TWT identifier information, and the first broadcast TWT identifier information indicates first broadcast rTWT that a first communication apparatus may join; or the third frame includes a TWT element, the TWT element includes second information, and the second information indicates that service data corresponding to a first TID may be transmitted in the first broadcast rTWT; and
a transceiver unit 1901, configured to send the third frame.

In an example, the second communication apparatus 1900 may be configured to perform an action performed by the AP multi-link device in the embodiment shown in FIG. 13. The second communication apparatus 1900 specifically includes:
a transceiver unit 1901, configured to receive a fifth frame from a first communication apparatus, where the fifth frame includes a TID-to-link mapping element, the TID-to-link mapping element includes fourth information, and the fourth information indicates whether the first communication apparatus separately allows use of a plurality of links between the first communication apparatus and the second communication apparatus, or the fourth information indicates TIDs that are determined by the first communication apparatus and that are respectively mapped to the plurality of links between the first communication apparatus and the second communication apparatus; and
a processing unit 1902, configured to: determine, based on third information and the fourth information, that a first link is allowed to be used for transmission, where the third information indicates whether the second communication apparatus separately allows use of the plurality of links between the first communication apparatus and the second communication apparatus; or determine, based on third information and the fourth information, that a first link is allowed to be used to transmit data corresponding to a first TID, where the third information indicates TIDs that are determined by the second communication apparatus and that are respectively mapped to the plurality of links.

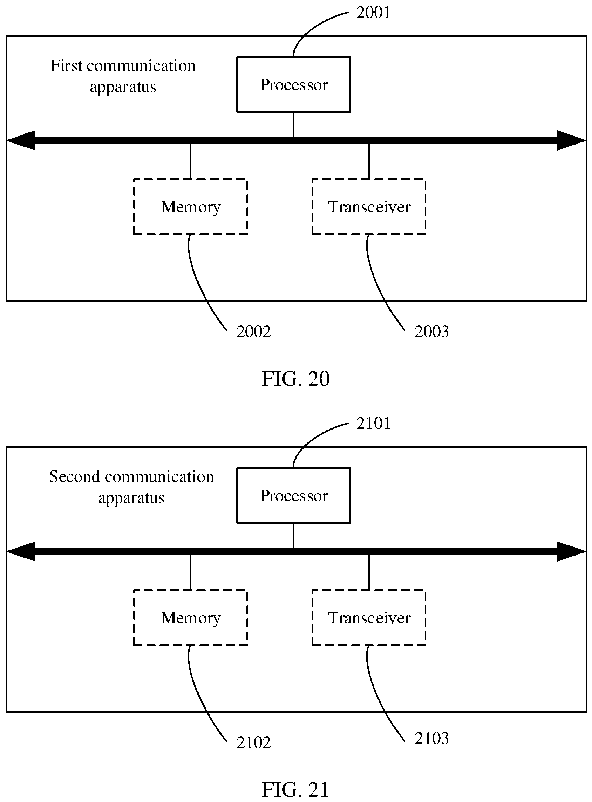

An embodiment of this application further provides a first communication apparatus. FIG. 20 is a schematic diagram of another structure of the first communication apparatus according to an embodiment of this application. The first communication apparatus may be configured to perform the steps performed by the first STA in the embodiments shown in FIG. 8, FIG. 11, and FIG. 12, or may be configured to perform the steps performed by the non-AP multi-link device in the embodiment shown in FIG. 13. For details, refer to related descriptions in the foregoing method embodiments.

The first communication apparatus includes a processor 2001.

Optionally, the first communication apparatus further includes a memory 2002 and a transceiver 2003. The processor 2001, the memory 2002, and the transceiver 2003 are separately connected through a bus, and the memory stores computer instructions.

Optionally, the sending unit 1601 and the receiving unit 1602 shown in FIG. 16 may be specifically the transceiver 2003. Therefore, specific implementation of the transceiver 2003 is not described again. The processing unit 1603 shown in FIG. 16 may be specifically the processor 2001. Therefore, specific implementation of the processor 2001 is not described again.

Optionally, the transceiver unit 1801 shown in FIG. 18 may be specifically the transceiver 2003. Therefore, specific implementation of the transceiver 2003 is not described again. The processing unit 1802 shown in FIG. 18 may be specifically the processor 2001. Therefore, specific implementation of the processor 2001 is not described again.

An embodiment of this application further provides a second communication apparatus. FIG. 21 is a schematic diagram of another structure of the second communication apparatus according to an embodiment of this application. The second communication apparatus may be configured to perform the steps performed by the first AP in the embodiments shown in FIG. 8, FIG. 11, and FIG. 12, or the second communication apparatus may be configured to perform the steps performed by the AP multi-link device in the embodiment shown in FIG. 13. For details, refer to related descriptions in the foregoing method embodiments.

The second communication apparatus includes a processor 2101.

Optionally, the second communication apparatus further includes a memory 2102 and a transceiver 2103. The processor 2101, the memory 2102, and the transceiver 2103 are separately connected through a bus, and the memory stores computer instructions.

Optionally, the sending unit 1701 and the receiving unit 1702 shown in FIG. 17 may be specifically the transceiver 2103. Therefore, specific implementation of the transceiver 2103 is not described again. The processing unit 1703 shown in FIG. 17 may be specifically the processor 2101. Therefore, specific implementation of the processor 2101 is not described again.

Optionally, the transceiver unit 1901 shown in FIG. 19 may be specifically the transceiver 2103. Therefore, specific implementation of the transceiver 2103 is not described again. The processing unit 1902 shown in FIG. 19 may be specifically the processor 2101. Therefore, specific implementation of the processor 2101 is not described again.

This application further provides a communication system. The communication system includes a first STA and a first AP. The first STA is configured to perform the steps performed by the first STA in the embodiments shown in FIG. 8, FIG. 11, and FIG. 12. The first AP is configured to perform the steps performed by the first AP in the embodiments shown in FIG. 8, FIG. 11, and FIG. 12.

This application further provides a communication system. The communication system includes a non-AP multi-link device and an AP multi-link device. The non-AP multi-link device is configured to perform the steps performed by the non-AP multi-link device in the embodiment shown in FIG. 13. The AP multi-link device is configured to perform the steps performed by the AP multi-link device in the embodiment shown in FIG. 13.

An embodiment of this application provides a computer program product including instructions. When the computer program product runs on a computer, any one of the implementations in the embodiments shown in FIG. 8, FIG. 11, FIG. 12, and FIG. 13 is performed.

An embodiment of this application provides a computer-readable storage medium, including computer instructions. When the instructions are run on a computer, any one of the implementations in the embodiments shown in FIG. 8, FIG. 11, FIG. 12, and FIG. 13 is performed.

An embodiment of this application provides a chip apparatus, including a processor, configured to invoke a computer program or computer instructions in a memory, so that any one of the implementations in the embodiments shown in FIG. 8, FIG. 11, FIG. 12, and FIG. 13 is performed.

Optionally, the chip apparatus further includes the memory. The memory is configured to store the computer program or the computer instructions. The chip apparatus may include a chip, or may include a chip and another discrete component.

Optionally, the processor is coupled to the memory through an interface.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes a plurality of instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

## Claims

1. A service priority determining method, wherein the method comprises:
sending, by a first station STA, a first frame to a first access point AP, wherein the first frame comprises expected priority information, and the expected priority information is a service priority that is of a first service and that the first STA expects to request; and
receiving, by the first STA, a second frame from the first AP, wherein the second frame comprises first priority information, and the first priority information indicates a service priority determined by the first AP for the first service.

2. A service priority determining method, wherein the method comprises:
receiving, by a first access point AP, a first frame from a first station STA, wherein the first frame comprises expected priority information, and the expected priority information is a service priority that is of a first service and that the first STA expects to request; and
sending, by the first AP, a second frame to the first STA, wherein the second frame comprises first priority information, and the first priority information indicates a service priority determined by the first AP for the first service.

3. The method according to claim 1 or 2, wherein the expected priority information comprises traffic identifier TID information that the first STA expects to request.

4. The method according to any one of claims 1 to 3, wherein the first priority information comprises target traffic identifier TID information, and the target TID information is TID information determined by the first AP for the first service.

5. The method according to claim 4, wherein the target TID information further indicates access category AC information corresponding to the first service, and there is a mapping relationship between the target TID information and the AC information.

6. The method according to claim 4, wherein the first priority information further comprises access category AC information determined by the first AP for the first service.

7. The method according to claim 6, wherein the second frame is a stream classification service SCS response frame; and the AC information is carried in a reserved bit of an intra-access category priority element of the SCS response frame, or the AC information is carried in a request type field of the SCS response frame.

8. The method according to any one of claims 4 to 7, wherein the second frame is the stream classification service SCS response frame; and the target TID information is carried in the reserved bit of the intra-access category priority element of the SCS response frame, the target TID information is carried in a user priority field of the intra-access category priority element of the SCS response frame, or the target TID information is carried in the request type field of the SCS response frame.

9. The method according to any one of claims 1 to 8, wherein the second frame further comprises first broadcast restricted target wake time TWT identifier information, and the first broadcast target wake time TWT identifier information indicates first broadcast restricted target wake time rTWT that the first STA may join.

10. The method according to claim 9, wherein the second frame further comprises first indication information, and
the first indication information indicates that the second frame comprises the first broadcast target wake time TWT identifier information.

11. The method according to claim 10, wherein the second frame is the stream classification service SCS response frame, and the first indication information and the first broadcast target wake time TWT identifier information are carried in the request type field of the SCS response frame.

12. The method according to claim 9, wherein the second frame is the stream classification service SCS response frame, the SCS response frame comprises a target wake time TWT element, and the first broadcast target wake time TWT identifier information is carried in the TWT element of the SCS response frame.

13. The method according to claim 9 or 12, wherein the first frame is a stream classification service SCS request frame, the SCS request frame comprises a TWT element, the TWT element of the SCS request frame comprises second broadcast target wake time TWT identifier information, and the second broadcast TWT identifier information indicates second broadcast rTWT that the first STA requests to join.

14. The method according to any one of claims 9 to 13, wherein the method further comprises:
actively initiating, by the first STA, a channel access in a period other than the first broadcast restricted target wake time rTWT.

15. A first communication apparatus, wherein the first communication apparatus comprises:
a sending unit, configured to send a first frame to a second communication apparatus, wherein the first frame comprises expected priority information, and the expected priority information is a service priority that is of a first service and that the first communication apparatus expects to request; and
a receiving unit, configured to receive a second frame from the second communication apparatus, wherein the second frame comprises first priority information, and the first priority information indicates a service priority determined by the second communication apparatus for the first service.

16. A second communication apparatus, wherein the second communication apparatus comprises:
a receiving unit, configured to receive a first frame from a first communication apparatus, wherein the first frame comprises expected priority information, and the expected priority information is a service priority that is of a first service and that the first communication apparatus expects to request; and
a sending unit, configured to send a second frame to the first communication apparatus, wherein the second frame comprises first priority information, and the first priority information indicates a service priority determined by the second communication apparatus for the first service.

17. The first communication apparatus according to claim 15 or the second communication apparatus according to claim 16, wherein the expected priority information comprises traffic identifier TID information that the first communication apparatus expects to request.

18. The first communication apparatus or the second communication apparatus according to any one of claims 15 to 17, wherein the first priority information comprises target traffic identifier TID information, and the target TID information is TID information determined by the second communication apparatus for the first service.

19. The first communication apparatus or the second communication apparatus according to claim 18, wherein the target TID information further indicates access category AC information corresponding to the first service, and there is a mapping relationship between the target TID information and the AC information.

20. The first communication apparatus or the second communication apparatus according to claim 18, wherein the first priority information further comprises access category AC information determined by the second communication apparatus for the first service.

21. The first communication apparatus or the second communication apparatus according to claim 18, wherein the second frame is a stream classification service SCS response frame, and the AC information is carried in a reserved bit of an intra-access category priority element of the SCS response frame, or the AC information is carried in a request type field of the SCS response frame.

22. The first communication apparatus or the second communication apparatus according to any one of claims 18 to 21, wherein the second frame is the stream classification service SCS response frame, and the target TID information is carried in the reserved bit of the intra-access category priority element of the SCS response frame, the target TID information is carried in a user priority field of the intra-access category priority element of the SCS response frame, or the target TID information is carried in the request type field of the SCS response frame.

23. The first communication apparatus or the second communication apparatus according to any one of claims 15 to 22, wherein the second frame further comprises first broadcast target wake time TWT identifier information, and the first broadcast target wake time TWT identifier information indicates first broadcast restricted target wake time rTWT that the first communication apparatus may join.

24. The first communication apparatus or the second communication apparatus according to claim 23, wherein the second frame further comprises first indication information, and the first indication information indicates that the second frame comprises the first broadcast target wake time TWT identifier information.

25. The first communication apparatus or the second communication apparatus according to claim 24, wherein the second frame is the stream classification service SCS response frame, and the first indication information and the first broadcast target wake time TWT identifier information are carried in the request type field of the SCS response frame.

26. The first communication apparatus or the second communication apparatus according to claim 23, wherein the second frame is the stream classification service SCS response frame, the SCS response frame comprises a target wake time TWT element, and the first broadcast target wake time TWT identifier information is carried in the TWT element of the SCS response frame.

27. The first communication apparatus or the second communication apparatus according to claim 23 or 26, wherein the first frame is a stream classification service SCS request frame, the SCS request frame comprises a TWT element, the TWT element of the SCS request frame comprises second broadcast target wake time TWT identifier information, and the second broadcast TWT identifier information indicates second broadcast rTWT that the first communication apparatus requests to join.

28. The first communication apparatus or the second communication apparatus according to any one of claims 23 to 27, wherein the first communication apparatus further comprises a processing unit; and
the processing unit is configured to actively initiate a channel access in a period other than the first broadcast restricted target wake time rTWT.

29. A communication apparatus, wherein the communication apparatus comprises:
a memory, configured to store computer instructions; and
a processor, configured to execute a computer program or the computer instructions stored in the memory, so that the method according to any one of claims 1 to 14 is performed.

30. A communication apparatus, wherein the communication apparatus comprises a processor, and the processor is configured to execute a computer program or computer instructions in a memory, so that the method according to any one of claims 1 to 14 is performed.

31. A communication apparatus, wherein the communication apparatus comprises a processor, and the processor is configured to perform the method according to any one of claims 1 to 14.

32. A computer program product comprising program instructions, wherein when the program instructions are run on a computer, the method according to any one of claims 1 to 14 is performed.

33. A computer-readable storage medium, wherein the computer-readable storage medium stores program instructions, and when the program instructions are run, the method according to any one of claims 1 to 14 is performed.
